# EUROPEAN PATENT APPLICATION

(11) **EP 2 684 845 A1**
(43) Date of publication of application: **15.01.2014**
(21) Application number: 12755338.6
(22) Date of filing: 28.02.2012
(51) Int. Cl.: C01B 31/36, C04B 35/565, C04B 35/626, C04B 35/645

(54) **READILY SINTERABLE SILICON CARBIDE POWDER AND SILICON CARBIDE CERAMIC SINTERED BODY**

(30) Priority: 08.03.2011 JP 2011050581
(71) Applicant: Shin-Etsu Chemical Co., Ltd., Tokyo 100-0004 (JP)
(72) Inventor: AOKI, Yoshitaka, Annaka-shi Gunma 379-0224 (JP); YANAIZUMI, Kazuhide, Annaka-shi Gunma 379-0224 (JP)
(74) Representative: Carpmaels & Ransford LLP
(86) International application number: PCT/JP2012/054904
(87) International publication number: WO 2012/121060

(57) **Abstract**

Provided are: a readily sinterable silicon carbide powder substantially having a stoichiometric composition and from which a dense sintered body can be obtained; a silicon carbide ceramic sintered body having a low specific resistance; and a production method thereof. This readily sinterable silicon carbide powder has a carbon/silicon elemental ratio of 0.96 to 1.04, an average particle diameter of 1.0 to 100 µm, and a ratio of 20% or less of an integrated value of an absorption intensity in a chemical shift range of 0 to 30 ppm to an integrated value of an absorption intensity in a chemical shift range of 0 to 170 ppm, in a ¹³C-NMR spectrum. By sintering this silicon carbide powder under pressure, there can be produced a dense sintered body having a low specific resistance and a high purity.

## Description

### TECHNICAL FIELD

The present invention relates to a readily sinterable silicon carbide powder and a production method thereof, as well as a ceramic molded product of silicon carbide and a production method thereof.

### BACKGROUND ART

Silicon carbide ceramics are chemically stable at both normal temperatures and high temperatures, and also exhibit excellent mechanical strength at high temperature, and they are therefore used as high-temperature materials. In recent years, in the field of semiconductor production, ceramic sintered bodies of high-purity silicon carbide having excellent heat resistance and creep resistance have come into use as boards, process tubes or the like in the steps of conducting heat treatments of semiconductor wafers, or conducting thermal diffusion of trace elements within semiconductor wafers.

Normally such ceramic sintered body of silicon carbide is produced by sintering a silicon carbide powder. When a silicon carbide powder used as a raw material for sintering contains impurity elements harmful to semiconductors, the resulting sintered body contains such impurity elements as well. That is, when, for example, heating a semiconductor wafer using a container or the like that is made of such sintered body, contamination occurs as the impurity elements enter the wafer. Therefore, when using a ceramic sintered body of silicon carbide for such purpose, it is desired that a silicon carbide powder as a raw material has as high a purity as possible. Further, when an elemental ratio of carbon in a silicon carbide powder used as a raw material exceeds a stoichiometric ratio, the resulting silicon carbide ceramic sintered body may contain free carbon. If using, in a plasma environment, such sintered body containing free carbon, the free carbon may be released as particles and thereby contaminate a semiconductor substrate.

As a method for obtaining a silicon carbide powder, there have been known: a method (Patent document 1) of forming carbon-silicon bonds by mixing an ethyl silicate having no carbon-silicon bonds and an organic compound and then reacting the same through heating; and a method (Patent document 2) in which a polycarbosilane is molten, infusibilized and/or thermally decomposed. However, these methods have problems such as: the necessity of using special devices for production and the troublesomenesses of the production processes. Further, there has been a problem that a carbon/silicon elemental ratio of the silicon carbide powder obtained through these methods is significantly larger than the stoichiometric ratio.

As a method for producing a silicon carbide powder, there has been known a method (Patent document 3) of producing a silicon carbide powder having an average particle diameter of 0.2 to 0.7 µm by thermally decomposing a halogenated silane at 1,500 to 2,100°C. However, since the average particle diameter of the silicon carbide powder obtained through this method is too small, a sintered body of silicon carbide ceramic obtained through sintering exhibits a small bulk density, thereby making it difficult to produce a sintered body having a high density.

As mentioned above, when the elemental ratio of carbon in a silicon carbide powder used as a raw material exceeds the elemental ratio of silicon, the resulting sintered body of silicon carbide ceramic may contain free carbon. If such sintered body of silicon carbide ceramic is used in a plasma environment, the free carbon may be released as particles, thereby contaminating a semiconductor substrate. Here, there has been proposed a method of, for example, irradiating an oxygen plasma to remove the free carbon (Patent document 4). However, since there exists a limitation on the size of an oxygen plasma irradiation device, this method is not suitable for producing a large-sized sintered body of silicon carbide ceramic and its process becomes troublesome.

Further, when using a sintered body of silicon carbide ceramic in, for example, a board or a process tube, a fme-circuit formation process performed on a semiconductor wafer may be adversely affected due to static charge if the sintered body has a high electric resistance value.

### PRIOR ART DOCUMENTS

### Patent Documents

Patent document 1: Japanese Unexamined Patent Application Publication No. Hei 11-171647 (JP 11-171647 A)
Patent document 2: Japanese Unexamined Patent Application Publication No. 2007-112683 (JP 2007-112683 A)
Patent document 3: Japanese Unexamined Patent Application Publication No. Sho 59-102809 (JP 59-102809 A)
Patent document 4: Japanese Unexamined Patent Application Publication No. 2007-511911 (JP 2007-511911 A)

### DISCLOSURE OF THE INVENTION

### Problems to be solved by the invention

It is an object of the present invention to solve the problems imposed by the conventional techniques, and provide a readily sinterable silicon carbide powder having an approximately stoichiometric composition and with which a dense sintered body can be obtained, and a production method thereof; a composition containing such silicon carbide powder useful as a green body, a ceramic sintered body of silicon carbide (a silicon carbide ceramic sintered body) having a low specific resistance, and a production method thereof.

After conducting further studies to solve the aforementioned problems, the inventors of the present invention have found that a particular readily sinterable silicon carbide powder could be obtained by thermally decomposing a cured silicone powder in a non-oxidizing atmosphere, and that the aforementioned problems could be solved by performing a specific sintering method using the readily sinterable silicon carbide powder.

That is, a first aspect of the present invention provides a readily sinterable silicon carbide powder having: a carbon/silicon elemental ratio of 0.96 to 1.04; an average particle diameter of 1.0 to 100 µm; and a ratio of 20% or less of an integrated value of an absorption intensity in a chemical shift range of 0 to 30 ppm to an integrated value of an absorption intensity in a chemical shift range of 0 to 170 ppm, in a ¹³C-NMR spectrum.

A second aspect of the present invention provides a production method of the aforementioned readily sinterable silicon carbide powder, which comprises producing a silicon carbide powder by thermally decomposing a cured silicone powder in a non-oxidizing atmosphere.

A third aspect of the present invention provides a silicon carbide powder-based composition comprising: the aforementioned readily sinterable silicon carbide powder; and an organic binder, a carbon powder or a combination thereof. This composition is useful as a body (ceramic clay).

A fourth aspect of the present invention provides a silicon carbide ceramic sintered body (a ceramic sintered body of silicon carbide) having a carbon/silicon elemental ratio of 0.96 to 1.04 and a specific resistance of 1 Ω·cm or less.

A fifth aspect of the present invention provides a production method of the aforementioned silicon carbide ceramic sintered body having a carbon/silicon elemental ratio of 0.96 to 1.04 and a specific resistance of 1 Ω·cm or less, which comprises sintering under pressure the aforementioned readily sinterable silicon carbide powder solely or in a form of a composition containing the readily sinterable silicon carbide powder and at least one of an organic binder and a carbon powder.

As a preferable embodiment of the fifth aspect of the present invention, the present invention particularly provides a production method wherein the sintered body obtained through pressure sintering is thereafter fired in an air atmosphere.

### Effects of the invention

According to the present invention, since a starting raw material is a cured silicone powder, a required readily sinterable silicon carbide powder can be easily obtained simply through thermal decomposition. Further, since the cured silicone powder can be easily obtained from a curable silicone composition, a readily sinterable silicon carbide powder with a high purity can be provided by increasing the purity at the stage of the curable silicone composition.

This silicon carbide powder has a high sinterability and a high purity. According to the pressure sintering performed in the production method of the present invention, it is possible to obtain a highly-pure and dense silicon carbide ceramic sintered body having no free carbon, having a low specific resistance and having a carbon/silicon elemental ratio substantially equivalent to a stoichiometric ratio.

After performing such pressure sintering, the sintered body thus obtained is calcined in the atmosphere, thereby obtaining a sintered body having a carbon/silicon elemental ratio even closer to 1.00, thus enhancing the purity and decreasing the specific resistance thereof.

### BRIEF DESCRIPTION OF THE DRAWINGS

FIG.1 shows a chart of ¹³C-NMR obtained by measuring a silicon carbide powder obtained in Example 1.
FIG.2 shows a chart of ¹³C-NMR obtained by measuring a silicon carbide powder obtained in Example 3.
FIG.3 shows a chart of ¹³C-NMR obtained by measuring a silicon carbide powder obtained in Comparative example 1.
FIG.4 shows a chart of ¹³C-NMR obtained by measuring a silicon carbide powder obtained in Comparative example 2.

### MODE FOR CARRYING OUT THE INVENTION

### -Readily sinterable silicon carbide powder-

A readily sinterable silicon carbide powder of the present invention is characterized by having a carbon/silicon elemental ratio of 0.96 to 1.04, an average particle diameter of 1.0 to 100 µm, and a ratio (referred to as "integrated value ratio" hereunder) of 20% or less of an integrated value of an absorption intensity in a chemical shift range of from 0 to 30 ppm to an integrated value of an absorption intensity in a chemical shift range of from 0 to 170 ppm, in the ¹³C-NMR spectrum. If this integrated value ratio exceeds 20%, the sinterability decreases, thereby failing to obtain a dense sintered body even after performing sintering under pressure in a later-described manner, thus increasing the specific resistance of the resulting sintered body.

As for impurity elements in the readily sinterable silicon carbide powder, a nitrogen content is less than 0.1% by mass, preferably not more than 0.05% by mass, and more preferably not more than 0.01% by mass. Further, a total content of Fe, Cr, Ni, Al, Ti, Cu, Na, Zn, Ca, Zr, Mg and B is less than 1 ppm, preferably not greater than 0.5 ppm, and more preferably not greater than 0.1 ppm. According to a production method of the silicon carbide powder of the present invention, there can be obtained a silicon carbide powder having a reduced impurity content as mentioned above.

The average particle diameter of the readily sinterable silicon carbide powder particles of the present invention is 1.0 to 100 µm, preferably 2.0 to 50 µm, and more preferably 3.0 to 20 µm. If the average particle diameter is excessively small, a bulk density of the powder becomes small, thus worsening a workability. Specifically, when sintering under a pressure, a silicon carbide powder or a silicon carbide powder-based composition containing a silicon carbide powder, the silicon carbide powder or the silicon carbide powder-based composition is encapsulated in a container made of carbon. If silicon carbide powder particles smaller than 1.0 µm are contained in a proportion of 50% by mass or more, there arises a problem that a desired amount cannot be placed therein. Further, also when preparing the aforementioned silicon carbide powder-based composition, if the silicon carbide powder particles smaller than 1.0 µm are contained in a proportion of 50% by mass or more, an amount of water needed to be added becomes much, thus making it difficult to produce a silicon carbide ceramic sintered body with a high density. Furthermore, handling of the powder becomes difficult since the powder dust becomes liable to fly off. If the average particle diameter exceeds 100 µm, the specific gravity becomes large relative to the specific surface area, thereby making the powder particles more likely to precipitate than the other components when a silicon carbide powder-based composition is prepared, and thus making it difficult to produce a homogeneous composition.

### -Production method of readily sinterable silicon carbide powder-

The aforementioned readily sinterable silicon carbide powder can be produced by thermally decomposing a cured silicone powder in a non-oxidizing atmosphere, followed by pulverizing the resulting product to a desired average particle diameter as required, i.e., an average particle diameter within the range of 1.0 to 100 µm.

### ·Cured silicone powder:

The cured silicone powder used as a starting raw material in this method can be produced by molding and curing a curable silicone composition.

When converted to the silicon carbide powder through a thermal decomposition described later, the cured silicone powder shrinks by approximately 10 to 50% by volume. Therefore, an average particle diameter of the cured silicone powder is preferably 1.0 to 100 µm, and more preferably 2.0 to 20 µm. Here, in this specification, an average particle diameter of particles refers to a volume average particle diameter, which is typically measured using a laser diffractometry, scattering particle measurement devices.

There are no particular limitations on the type of curable silicone composition used in the production method of the present invention, and any type of curable silicone composition can be used. Specific examples thereof include organic peroxide-curable, radiation-curable, addition-curable, and condensation-curable silicone compositions. Organic peroxide-curable and radiation-curable reactive silicone compositions are advantageous in terms of achieving a higher degree of purity of the resulting silicon carbide powder.

There are no particular limitations on the type of curable silicone composition used in the production method of the present invention, and any type of curable silicone composition can be used. Specific examples thereof include organic peroxide-curable, radiation-curable, addition-curable and condensation-curable silicone compositions. Organic peroxide-curable and radiation-curable reactive silicone compositions are advantageous in terms of achieving a higher degree of purity of the resulting silicon carbide powder, and the total content of the impurity elements in the resulting silicon carbide powder can be reduced to less than 1 ppm, preferably not greater than 0.5 ppm, and more preferably not greater than 0.1 ppm. Examples of the impurity elements include particularly Fe, Cr, Ni, Al, Ti, Cu, Na, Zn, Ca, Zr, Mg and B, and the total content thereof can be reduced to the aforementioned content.

Examples of the organic peroxide-curable silicone compositions include silicone compositions that undergo curing via a radical polymerization, in the presence of an organic peroxide, of a linear organopolysiloxane having alkenyl groups such as vinyl groups at either one of or both of molecular chain terminals (either at one terminal or at both terminals) and non-molecular chain terminals.

Examples of the radiation-curable silicone compositions include ultraviolet light-curable silicone compositions and electron beam-curable silicone compositions.

Examples of the ultraviolet light-curable silicone compositions include silicone compositions that undergo curing by applying the energy of an ultraviolet light having a wavelength of 200 to 400 nm. In this case, there are no particular limitations on a curing mechanism. Specific examples of these compositions include: acrylic silicone-based silicone compositions comprising an organopolysiloxane containing acryloyl groups or methacryloyl groups, and a photopolymerization initiator; mercapto-vinyl addition polymerizable silicone compositions comprising a mercapto group-containing organopolysiloxane, an organopolysiloxane that contains alkenyl groups such as vinyl groups, and a photopolymerization initiator; addition reaction-type silicone compositions that employs platinum group metal-based catalysts that are the same as those used for heat-curable addition reaction-type compositions; and cationic polymerizable silicone compositions comprising an organopolysiloxane containing epoxy groups, and an onium salt catalyst. Any of these compositions can be used as an ultraviolet light-curable silicone composition.

Examples of the electron beam-curable silicone compositions that can be used include any of the silicone compositions that are cured by a radical polymerization that is initiated by irradiating an organopolysiloxane containing radical-polymerizable groups with an electron beam.

Examples of the addition-curable silicone compositions include silicone compositions that are cured by reacting the aforementioned linear organopolysiloxane having alkenyl groups with an organohydrogenpolysiloxane (via a hydrosilylation addition reaction) in the presence of a platinum group metal-based catalyst.

Examples of the condensation-curable silicone compositions include: silicone compositions that are cured by reacting an organopolysiloxane with both terminals blocked with silanol groups, and an organohydrogenpolysiloxane or a hydrolyzable silane such as a tetraalkoxysilane or an organotrialkoxysilane and/or a partial hydrolysis-condensation product thereof, in the presence of a condensation reaction catalyst such as an organotin-based catalyst; and silicone compositions that are cured by reacting an organopolysiloxane with both terminals blocked with trialkoxy groups, dialkoxyorgano groups, trialkoxysiloxyethyl groups or dialkoxyorganosiloxyethyl groups, in the presence of a condensation reaction catalyst such as an organotin-based catalyst.

However, from the viewpoint of avoiding, as far as possible, contamination with impurity elements, radiation-curable silicone compositions and organic peroxide-curable silicone compositions are preferred.

Each of the above curable silicone compositions is described below in detail.

### ·Organic Peroxide-Curable Silicone Compositions:

Specific examples of the organic peroxide-curable silicone compositions include compositions comprising:
(a) an organopolysiloxane containing at least two alkenyl groups bonded to silicon atoms;
(b) an organic peroxide; and,
(c) as an optional component, an organohydrogenpolysiloxane containing at least two hydrogen atoms bonded to silicon atoms (namely, SiH groups), in an amount that provides 0.1 to 2 mols of hydrogen atoms bonded to silicon atoms within the component (c) per 1 mol of alkenyl groups within the entire curable silicone composition.

### Component (a)

The organopolysiloxane of the component (a) is the base polymer of the organic peroxide-curable silicone composition. There are no particular limitations on the polymerization degree of the organopolysiloxane of the component (a), and organopolysiloxanes that are liquid at 25°C or natural rubber-type organopolysiloxanes may be used as the component (a). The average polymerization degree is preferably within a range from 50 to 20,000, more preferably from 100 to 10,000, and still more preferably from 100 to approximately 2,000. Further, from the viewpoint of availability of the raw material, basically the organopolysiloxane of the component (a) has a linear structure with no branching in which the molecular chain is composed of repeating diorganosiloxane units (R¹₂SiO_{2/2} units) and both molecular chain terminals are blocked with triorganosiloxy groups (R¹₃SiO_{1/2} units) or hydroxydiorganosiloxy groups ((HO)R¹₂SiO_{1/2} units), or has a cyclic structure with no branching in which the molecular chain is composed of repeating diorganosiloxane units. These structures may partially include some branched structures such as trifunctional siloxane units or SiO₂ units. In the above description, R¹ is as defined in formula (1) described below.

Examples of organopolysiloxanes that can be used as the component (a) include organopolysiloxanes having at least two alkenyl groups within each molecule, as represented, for example, by an average composition formula (1) shown below:

R¹ₐSiO_{(4-a)/2} (1)

wherein R¹ represents identical or different, unsubstituted or substituted monovalent hydrocarbon groups of 1 to 10, preferably 1 to 8 carbon atoms, wherein 50 to 99 mol% of the R¹ groups are alkenyl groups, and a represents a positive number within a range from 1.5 to 2.8, preferably from 1.8 to 2.5, and more preferably from 1.95 to 2.05.

Specific examples of R¹ include: alkyl groups such as a methyl group, ethyl group, propyl group, butyl group, pentyl group, and hexyl group; aryl groups such as a phenyl group, tolyl group, xylyl group, and naphthyl group; cycloalkyl groups such as a cyclopentyl group and cyclohexyl group; alkenyl groups such as a vinyl group, allyl group, propenyl group, isopropenyl group and butenyl group; and groups in which some or all of the hydrogen atoms within one of the above hydrocarbon groups have each been substituted with a halogen atom such as a fluorine atom, bromine atom or chlorine atom, or a cyano group or the like, such as a chloromethyl group, chloropropyl group, bromoethyl group, trifluoropropyl group and cyanoethyl group. From the viewpoint of achieving high purity, the R¹ groups are preferably composed solely of hydrocarbon groups.

In this case, at least two of the R¹ groups represent alkenyl groups (and in particular, alkenyl groups that preferably contain 2 to 8, more preferably 2 to 6 carbon atoms). The alkenyl group content in the total organic groups bonded to silicon atoms (that is, in all the unsubstituted and substituted monovalent hydrocarbon groups represented by R¹ within the above average composition formula (1)) is preferably within a range from 50 to 99 mol%, and more preferably from 75 to 95 mol%. In those cases where the organopolysiloxane of the component (a) has a linear structure, these alkenyl groups may be bonded solely to the silicon atoms at the molecular chain terminals, solely to the non-terminal silicon atoms within the molecular chain, or to both of these types of silicon atoms.

### Component (b)

The component (b) is an organic peroxide that is used as a catalyst for accelerating the cross-linking reaction of the component (a) in the organic peroxide-curable organopolysiloxane composition. Any conventional organic peroxide can be used as the component (b), as long as it is capable of accelerating the cross-linking reaction of the component (a). Specific examples of the component (b) include benzoyl peroxide, 2,4-dichlorobenzoyl peroxide, p-methylbenzoyl peroxide, o-methylbenzoyl peroxide, 2,4-dicumyl peroxide, 2,5-dimethyl-bis(2,5-t-butylperoxy)hexane, di-t-butyl peroxide, t-butyl perbenzoate and 1,1-bis(t-butylperoxycarboxy)hexane, although they are not restrictive.

The amount of the component (b) added is an amount that is effective as a catalyst for accelerating the cross-linking reaction of the component (a). This amount is preferably within a range from 0.1 to 10 parts by mass, and more preferably from 0.2 to 2 parts by mass, per 100 parts by mass of the component (a). If the amount of the component (b) added is less than 0.1 parts by mass per 100 parts by mass of the component (a), then the time required for the curing is increased, which is economically disadvantageous. Further, if the amount exceeds 10 parts by mass per 100 parts by mass of the component (a), then foaming caused by the component (b) tends to occur, whereby adversely affecting the strength and heat resistance of the cured reaction product.

### Component (c)

The organohydrogenpolysiloxane of the component (c), which is an optional component, contains at least two (typically from 2 to 200), and preferably three or more (typically from 3 to 100) hydrogen atoms bonded to silicon atoms (SiH groups). Although solely the component (a) can be heat cured through adding the component (b), the curing can be performed at a lower temperature in a shorter time by adding the component (c) which readily reacts with the component (a), compared with the case where the component (a) is solely used. There are no particular limitations on the molecular structure of the component (c), and conventionally produced linear, cyclic, branched, or three dimensional network (resin-like) organohydrogenpolysiloxanes can also be used as the component (c). In those cases where the component (c) has a linear structure, the SiH groups may be bonded only to the silicon atoms at the molecular chain terminals or only to the non-terminal silicon atoms within the molecular chain, or may also be bonded to both of these types of silicon atoms. Furthermore, the number of silicon atoms within each molecule (or the polymerization degree) is typically within a range from 2 to about 300, and is preferably from 4 to about 150. An organohydrogenpolysiloxane that is liquid at room temperature (25°C) can be used favorably as the component (c).

Examples of the component (c) include organohydrogenpolysiloxanes represented, for example, by an average composition formula (2) shown below:

R²_{b}H_{c}SiO_{(4-b-c)/2} (2)

wherein R² represents identical or different, unsubstituted or substituted monovalent hydrocarbon groups containing no aliphatic unsaturated bonds and containing 1 to 10, preferably 1 to 8 carbon atoms, and b and c represent positive numbers that preferably satisfy 0.7≤b≤2.1, 0.001≤c≤1.0, and 0.8≤b+c≤3.0, and more preferably satisfy 1.0≤b≤2.0, 0.41≤c≤1.0, and 1.5≤b+c≤2.5.

Examples of R² include the same groups as those described above as R¹ in the above average composition formula (1) (provided that the alkenyl groups are excluded).

Specific examples of the organohydrogenpolysiloxanes represented by the above average composition formula (2) include
1,1,3,3-tetramethyldisiloxane,
1,3,5,7-tetramethylcyclotetrasiloxane,
tris(hydrogendimethylsiloxy)methylsilane,
tris(hydrogendimethylsiloxy)phenylsilane,
methylhydrogencyclopolysiloxanes,
cyclic copolymers of methylhydrogensiloxane and dimethylsiloxane,
methylhydrogenpolysiloxanes with both terminals blocked with trimethylsiloxy groups,
copolymers of methylhydrogensiloxane and dimethylsiloxane with both terminals blocked with trimethylsiloxy groups,
dimethylpolysiloxanes with both terminals blocked with methylhydrogensiloxy groups,
copolymers of methylhydrogensiloxane and dimethylsiloxane with both terminals blocked with methylhydrogensiloxy groups,
copolymers of methylhydrogensiloxane and diphenylsiloxane with both terminals blocked with trimethylsiloxy groups,
copolymers of methylhydrogensiloxane, diphenylsiloxane, and dimethylsiloxane with both terminals blocked with trimethylsiloxy groups,
copolymers of methylhydrogensiloxane, methylphenylsiloxane and dimethylsiloxane with both terminals blocked with trimethylsiloxy groups,
copolymers of methylhydrogensiloxane, diphenylsiloxane and dimethylsiloxane with both terminals blocked with methylhydrogensiloxy groups,
copolymers of methylhydrogensiloxane, methylphenylsiloxane and dimethylsiloxane with both terminals blocked with methylhydrogensiloxy groups,
copolymers composed of (CH₃)₂HSiO_{1/2} units, (CH₃)₂SiO_{2/2} units, and SiO_{4/2} units,
copolymers composed of (CH₃)₂HSiO_{1/2} units and SiO_{4/2} units, and
copolymers composed of (CH₃)₂HSiO_{1/2} units, SiO_{4/2} units, and (C₆H₅)₃SiO_{1/2} units.

The amount of the component (c) added is preferably within a range from 0 to 100 parts by mass, and more preferably from 0 to 50 parts by mass, per 100 parts by mass of the component (a). If the amount of the component (c) exceeds 100 parts by mass per 100 parts by mass of the component (a), then foaming is caused by the component (c), and the strength and heat resistance of the cured reaction product are adversely affected.

### ·Ultraviolet Light-Curable Silicone Compositions

Specific examples of ultraviolet light-curable silicone compositions include compositions comprising:
(d) an ultraviolet light-reactive organopolysiloxane, and
(e) a photopolymerization initiator.

### Component (d)

The ultraviolet light-reactive organopolysiloxane of the component (d) typically functions as the base polymer in the ultraviolet light-curable silicone composition. Although there are no particular limitations on the component (d), the component (d) is preferably an organopolysiloxane containing at least two, more preferably from 2 to 20, and most preferably from 2 to 10, ultraviolet light-reactive groups within each molecule. The plurality of ultraviolet light-reactive groups that exist within this organopolysiloxane may be all the same or different.

From the viewpoint of availability of the raw material, the organopolysiloxane of the component (d) is basically either a linear structure with no branching, in which the molecular chain (the main chain) is composed of repeating diorganosiloxane units (R¹₂SiO_{2/2} units), and both molecular chain terminals are blocked with triorganosiloxy groups (R¹₃SiO_{1/2} units), or a cyclic structure with no branching in which the molecular chain is composed of the repeating diorganosiloxane units, although these structures may partially include some branched structures such as trifunctional siloxane units or SiO₂ units. In the above description, R¹ is the same as defined above in relation to formula (1). In those cases where the organopolysiloxane of the component (d) has a linear structure, the ultraviolet light-reactive groups may exist only at the molecular chain terminals or only at non-terminal positions within the molecular chain, or may also exist at both these positions, although structures containing ultraviolet light-reactive groups at least at both molecular chain terminals are preferred.

Examples of the ultraviolet light-reactive groups include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; an epoxy group; and hydrosilyl group, and of these, an acryloyl group, methacryloyl group, mercapto group, epoxy group and hydrosilyl group are preferred, and an acryloyl group and methacryloyl group are particularly desirable.

Although there are no particular limitations on the viscosity of the organopolysiloxane, the viscosity at 25°C is preferably within a range from 100 to 1,000,000 mPa·s, more preferably from 200 to 500,000 mPa·s, and still more preferably from 200 to 100,000 mPa·s. Examples of preferred embodiments of the component (d) include organopolysiloxanes containing at least two ultraviolet light-reactive groups, represented, for example, by either a general formula (3a) shown below: 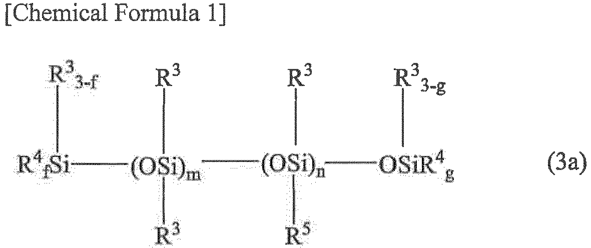 wherein R³ represents identical or different, unsubstituted or substituted monovalent hydrocarbon groups that contain no ultraviolet light-reactive groups, R⁴ represents identical or different groups that contain an ultraviolet light-reactive group, R⁵ represents identical or different groups that contain an ultraviolet light-reactive group, m represents an integer of 5 to 1,000, n represents an integer of 0 to 100, f represents an integer of 0 to 3, and g represents an integer of 0 to 3, provided that f+g+n≥2, or a general formula (3b) shown below: 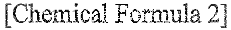 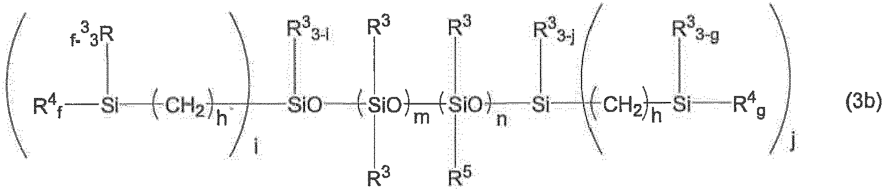 wherein R³, R⁴, R⁵, m, n, f and g are as defined above for the general formula (3 a), h represents an integer of 2 to 4, and i and j each represents an integer of 1 to 3, provided that fi+gj+n≥2.

In the above general formulas (3a) and (3b), R³ represents identical or different, unsubstituted or substituted monovalent hydrocarbon groups that contain no ultraviolet light-reactive groups and preferably contain from 1 to 20 carbon atoms, more preferably from 1 to 10 carbon atoms, and most preferably from 1 to 8 carbon atoms. Examples of the monovalent hydrocarbon groups represented by R³ include alkyl groups such as a methyl group, ethyl group, propyl group, butyl group, pentyl group and hexyl group; aryl groups such as a phenyl group, tolyl group, xylyl group and naphthyl group; cycloalkyl groups such as a cyclopentyl group, cyclohexyl group and cyclopentyl group; aralkyl groups such as a benzyl group and phenylethyl group; and groups in which some or all of the hydrogen atoms within one of the above hydrocarbon groups have each been substituted with a halogen atom, cyano group or carboxyl group or the like, including a chloromethyl group, chloropropyl group, bromoethyl group, trifluoropropyl group, cyanoethyl group and 3-cyanopropyl group, and of these, a methyl group or phenyl group is preferred, and a methyl group is more preferable. Furthermore, the monovalent hydrocarbon group represented by R³ may also include one or two or more sulfonyl groups, ether linkages (-O-) and/or carbonyl groups or the like within the group structure.

In the above general formulas (3a) and (3b), examples of the ultraviolet light-reactive groups contained within the groups R⁴ and R⁵ include alkenyl groups such as a vinyl group, allyl group and propenyl group; alkenyloxy groups such as a vinyloxy group, allyloxy group, propenyloxy group and isopropenyloxy group; aliphatic unsaturated groups other than alkenyl groups, such as an acryloyl group and methacryloyl group; a mercapto group; epoxy group and hydrosilyl group, and of these, an acryloyl group, methacryloyl group, epoxy group and hydrosilyl group are preferred, and an acryloyl group and methacryloyl group are more preferred. Accordingly, the groups containing an ultraviolet light-reactive group represented by R⁴ and R⁵ are monovalent groups that contain any of the above ultraviolet light-reactive groups, and specific examples of R⁴ and R⁵ include a vinyl group, allyl group, 3-glycidoxypropyl group, 2-(3,4-epoxycyclohexyl)ethyl group, 3-methacryloyloxypropyl group, 3-acryloyloxypropyl group, 3-mercaptopropyl group, 2-{bis(2-methacryloyloxyethoxy)methylsilyl}ethyl group, 2-{bis(2-acryloyloxyethoxy)methylsilyl}ethyl group, 2-{2-acryloyloxyethoxy)dimethylsilyl}ethyl group, 2-{bis(1,3-dimethacryloyloxy-2-propoxy)methylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl} ethyl group, and examples of preferred groups include a 3-methacryloyloxypropyl group, 3-acryloyloxypropyl group, 2-{bis(2-methacryloyloxyethoxy)methylsilyl}ethyl group, 2-{bis(2-acryloyloxyethoxy)methylsilyl}ethyl group, 2-{(2-acryloyloxyethoxy)dimethylsilyl}ethyl group, 2-{(1,3-dimethacryloyloxy-2-propoxy)dimethylsilyl}ethyl group, 2-{bis(1-acryloyloxy-3-methacryloyloxy-2-propoxy)methylsilyl}ethyl group and 2-{bis(1-acryloyloxy-3-methacryloyloxy-2-propoxy)dimethylsilyl}ethyl group. Groups represented by each of R⁴ and R⁵ may be the same or different from each other, and the groups represented by R⁴ may be the same as or different from the groups represented by R⁵.

In the above general formulas (3a) and (3b), m is typically an integer of 5 to 1,000, preferably an integer of 10 to 800, and more preferably an integer of 50 to 500. n is typically an integer of 0 to 100, preferably an integer of 0 to 50, and more preferably an integer of 0 to 20. f is an integer of 0 to 3, preferably an integer of 0 to 2, and more preferably 1 or 2. g is an integer of 0 to 3, preferably an integer of 0 to 2, and more preferably 1 or 2. In the above general formula (3b), h is typically an integer of 2 to 4, and is preferably 2 or 3. Each of i and j represents an integer of 1 to 3, preferably an integer of 1 or 2. Moreover, as described above, the organopolysiloxanes represented by the above general formulas (3a) and (3b) contain at least two of the ultraviolet light-reactive groups, and consequently f+g+n≥2 in the formula (3a), and fi+gj+n≥2 in the formula (3b).

Specific examples of organopolysiloxanes represented by the above formulas (3a) and (3b) include the compounds shown below.

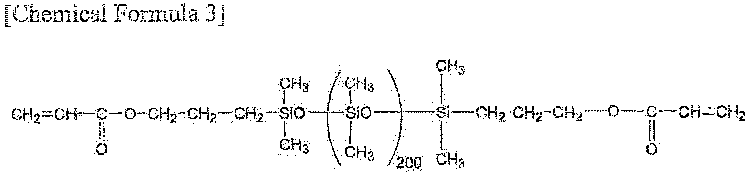

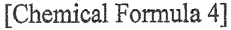

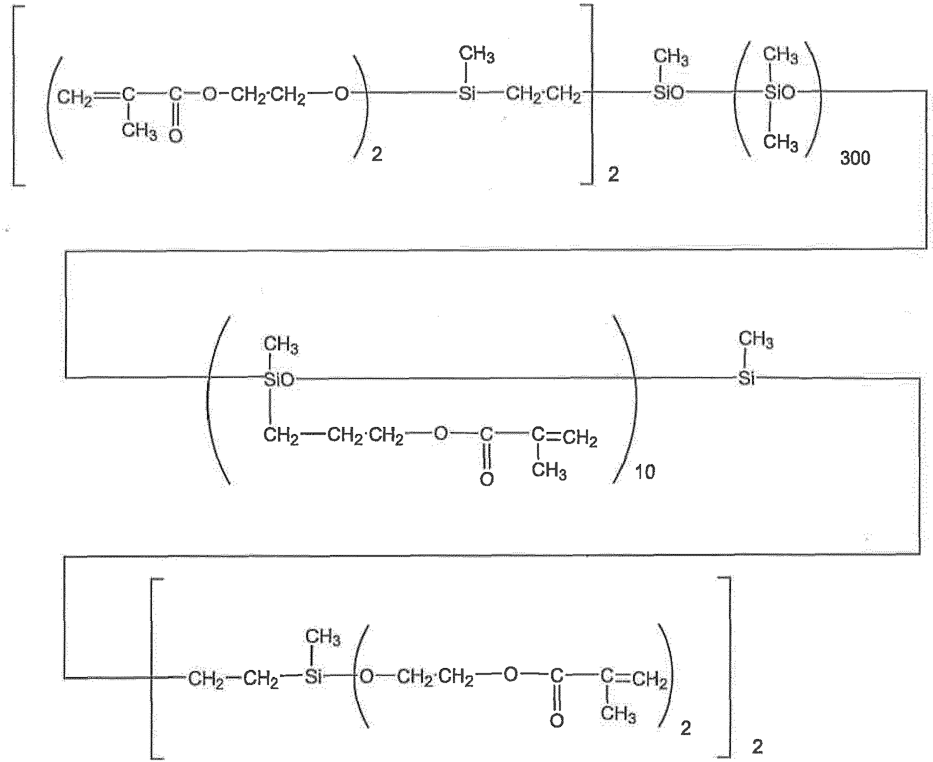

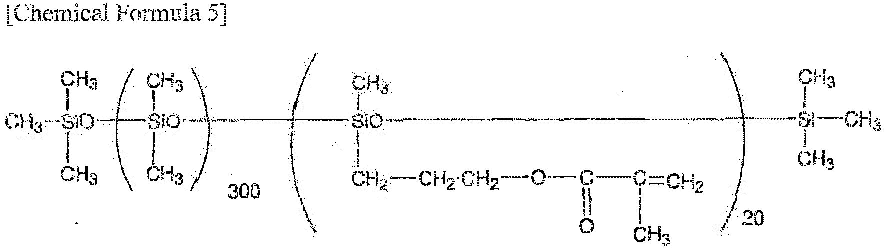

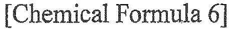

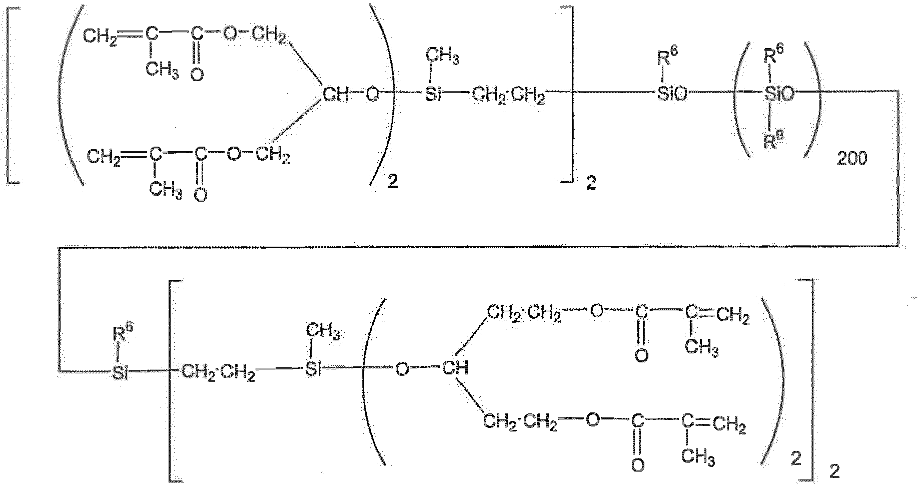

In the above formulas, 90 mol% of the R⁶ groups are methyl groups, and 10 mol% thereof are phenyl groups.

### Component (e)

The photopolymerization initiator of the component (e) has the effect of accelerating the photopolymerization through the ultraviolet light-reactive groups within the above component (d). There are no particular limitations on the component (e), and specific examples thereof include acetophenone, propiophenone, benzophenone, xanthol, fluorein, benzaldehyde, anthraquinone, triphenylamine, 4-methylacetophenone, 3-pentylacetophenone, 4-methoxyacetophenone, 3-bromoacetophenone, 4-allylacetophenone, p-diacetylbenzene, 3-methoxybenzophenone, 4-methylbenzophenone, 4-chlorobenzophenone, 4,4'-dimethoxybenzophenone, 4-chloro-4'-benzylbenzophenone, 3-chloroxanthone, 3,9-dichloroxanthone, 3-chloro-8-nonylxanthone, benzoin, benzoin methyl ether, benzoin butyl ether, bis(4-dimethylaminophenyl) ketone, benzyl methoxy acetal, 2-chlorothioxanthone, diethylacetophenone, 1-hydroxychlorophenyl ketone, 1-hydroxycyclohexyl phenyl ketone, 2-methyl-(4-(methylthio)phenyl)-2-morpholino-1-propane, 2,2-dimethoxy-2-phenylacetophenone, diethoxyacetophenone, and 2-hydroxy-2-methyl-1-phenylpropan-1-one. From the viewpoint of ensuring high purity, benzophenone, 4-methoxyacetophenone, 4-methylbenzophenone, diethoxyacetophenone, 1-hydroxycyclohexyl phenyl ketone and 2-hydroxy-2-methyl-1-phenylpropan-1-one are preferred, and diethoxyacetophenone, 1-hydroxycyclohexyl phenyl ketone and 2-hydroxy-2-methyl-1-phenylpropan-1-one are more preferred. Any one of these photopolymerization initiators may be used alone, or two or more different initiators may be used in combination.

Although there are no particular limitations on the amount of the component (e) added, the amount is preferably within a range from 0.01 to 10 parts by mass, more preferably from 0.1 to 3 parts by mass, and still more preferably from 0.5 to 3 parts by mass, per 100 parts by mass of the component (d). Provided the amount added falls within the above range, curing of the silicone composition can be more readily controlled.

### ·Addition-Curable Silicone Compositions

Specific examples of addition-curable silicone compositions include compositions comprising:
(f) an organopolysiloxane containing at least two alkenyl groups bonded to silicon atoms,
(g) an organohydrogenpolysiloxane containing at least two hydrogen atoms bonded to silicon atoms (namely, SiH groups), in an amount that provides 0.1 to 5 mols of hydrogen atoms bonded to silicon atoms within the component (g) per 1 mol of alkenyl groups within the entire curable silicone composition, and
(h) an effective amount of a platinum group metal-based catalyst.

### ·Component (f)

The organopolysiloxane of the component (f) is the base polymer of the addition-curable silicone composition, and contains at least two alkenyl groups bonded to silicon atoms. Conventional organopolysiloxanes can be used as the component (f). The weight-average molecular weight of the organopolysiloxane of the component (f), measured by gel permeation chromatography (hereinafter abbreviated as GPC) and referenced against polystyrene standards, is preferably within a range from approximately 3,000 to 300,000. Moreover, the viscosity at 25°C of the organopolysiloxane of the component (f) is preferably within a range from 100 to 1,000,000 mPa·s, and is more preferably from approximately 1,000 to 100,000 mPa·s. If the viscosity is 100 mPa·s or less, then the thread-forming ability of the composition is poor, and narrowing the diameter of fiber becomes difficult, whereas if the viscosity is 1,000,000 mPa·s or greater, then handling the composition becomes difficult. From the viewpoint of availability of the raw material, the organopolysiloxane of the component (f) is basically either a linear structure with no branching, in which the molecular chain (the main chain) is composed of repeating diorganosiloxane units (R⁷₂SiO_{2/2} units), and both molecular chain terminals are blocked with triorganosiloxy groups (R⁷₃SiO_{1/2} units), or a cyclic structure with no branching in which the molecular chain is composed of repeating diorganosiloxane units, although these structures may partially include some branched structures including R⁷SiO_{3/2} units and/or SiO_{4/2} units. In the above description, R⁷ is the same as defined in formula (4) described below.

Examples of organopolysiloxanes that can be used as the component (f) include organopolysiloxanes having at least two alkenyl groups within each molecule, as represented, for example, by an average composition formula (4) shown below:

R⁷₁SiO_{(4-1)/2} (4)

wherein R⁷ represents identical or different, unsubstituted or substituted monovalent hydrocarbon groups of 1 to 10 carbon atoms, preferably 1 to 8 carbon atoms, and 1 represents a positive number that is preferably within a range from 1.5 to 2.8, more preferably from 1.8 to 2.5, and still more preferably from 1.95 to 2.05. Examples of R⁷ include the same groups as those illustrated for R¹ in the average composition formula (1).

In this case, at least two of the R⁷ groups represent alkenyl groups (and in particular, alkenyl groups that preferably contain from 2 to 8 carbon atoms, and even more preferably from 2 to 6 carbon atoms). The alkenyl group content in the total of the organic groups bonded to silicon atoms (that is, in all the unsubstituted and substituted monovalent hydrocarbon groups represented by R⁷ within the above average composition formula (4)) is preferably within a range from 50 to 99 mol%, more preferably from 75 to 95 mol%. In those cases where the organopolysiloxane of the component (f) has a linear structure, these alkenyl groups may be bonded only to the silicon atoms at the molecular chain terminals or only to the non-terminal silicon atoms within the molecular chain, or may also be bonded to both of these types of silicon atoms, but from the viewpoints of the composition curing rate and the physical properties of the resulting cured product and the like, at least one alkenyl group is desirably bonded to a silicon atom at a molecular chain terminal.

### ·Component (g)

The organohydrogenpolysiloxane of the component (g) contains at least two (typically from 2 to 200), and preferably tree or more (typically from 3 to 100) hydrogen atoms each bonded to a silicon atom (SiH groups). The component (g) reacts with the component (f) and functions as a cross-linking agent. There are no particular limitations on the molecular structure of the component (g), and conventionally produced linear, cyclic, branched, or three dimensional network (resin-like) organohydrogenpolysiloxanes can be used as the component (b). In those cases where the component (g) has a linear structure, the SiH groups may be bonded only to the silicon atoms at the molecular chain terminals or only to the non-terminal silicon atoms within the molecular chain, or may also be bonded to both of these types of silicon atoms. Furthermore, the number of silicon atoms within each molecule (or the polymerization degree) is typically within a range from 2 to about 300, and is preferably from 4 to about 150. An organohydrogenpolysiloxane that is liquid at room temperature (25°C) can be used favorably as the component (g).

Examples of the component (g) include organohydrogenpolysiloxanes represented, for example, by an average composition formula (5) shown below.

R⁸ₚH_{q}SiO_{(4-p-q)/2} (5)

wherein R⁸ represents identical or different, unsubstituted or substituted monovalent hydrocarbon groups containing no aliphatic unsaturated bonds and containing 1 to 10 carbon atoms, and preferably 1 to 8 carbon atoms, and p and q represent positive numbers that preferably satisfy 0.7≤p≤2.1, 0.001≤q≤1.0 and 0.8≤p+q≤3.0, and more preferably satisfy 1.0≤p≤2,.0, 0.01≤q≤1.0 and 1.5≤p+q≤2.5.

Examples of R⁸ include the same groups as those illustrated above for R¹ in the average composition formula (1) (but excluding the alkenyl groups).

Specific examples of organohydrogenpolysiloxanes represented by the above average composition formula (3) include 1,1,3,3-tetramethyldisiloxane, 1,3,5,7-tetramethylcyclotetrasiloxane, tris(hydrogendimethylsiloxy)methylsilane, tris(hydrogendimethylsiloxy)phenylsilane, methylhydrogencyclopolysiloxanes, cyclic copolymers of methylhydrogensiloxane and dimethylsiloxane, methylhydrogenpolysiloxanes with both terminals blocked with trimethylsiloxy groups, copolymers of methylhydrogensiloxane and dimethylsiloxane with both terminals blocked with trimethylsiloxy groups, dimethylpolysiloxanes with both terminals blocked with methylhydrogensiloxy groups, copolymers of methylhydrogensiloxane and dimethylsiloxane with both terminals blocked with methylhydrogensiloxy groups, copolymers of methylhydrogensiloxane and diphenylsiloxane with both terminals blocked with trimethylsiloxy groups, copolymers of methylhydrogensiloxane, diphenylsiloxane and dimethylsiloxane with both terminals blocked with trimethylsiloxy groups, copolymers of methylhydrogensiloxane, methylphenylsiloxane and dimethylsiloxane with both terminals blocked with trimethylsiloxy groups, copolymers of methylhydrogensiloxane, diphenylsiloxane and dimethylsiloxane with both terminals blocked with methylhydrogensiloxy groups, copolymers of methylhydrogensiloxane, methylphenylsiloxane and dimethylsiloxane with both terminals blocked with methylhydrogensiloxy groups, copolymers composed of (CH₃)₂HSiO_{1/2} units, (CH₃)₂SiO_{2/2} units and SiO_{4/2} units, copolymers composed of (CH₃)₂HSiO_{1/2} units and SiO_{4/2} units, and copolymers composed of (CH₃)₂HSiO_{1/2} units, SiO_{4/2} units, and (C₆H₅)₃SiO_{1/2} units.

The amount of the component (g) added is an amount sufficient to provide 0.1 to 5.0 mols, preferably 0.5 to 3.0 mols, and more preferably 0.8 to 2.0 mols, of SiH groups within this component (g) per 1 mol of alkenyl groups within the entire curable silicone composition, and in particular, per 1 mol of alkenyl groups bonded to silicon atoms within the entire curable silicone composition, and especially per 1 mol of alkenyl groups bonded to silicon atoms within the component (f). The proportion of the alkenyl groups bonded to silicon atoms within the component (f) relative to the total number of alkenyl groups that exist within the entire curable silicone composition is preferably within a range from 80 to 100 mol%, and more preferably from 90 to 100 mol%. In those cases where the component (f) is the only component that contains alkenyl groups within the entire curable silicone composition, the amount of SiH groups within the component (g) per 1 mol of alkenyl groups within the component (f) is typically within a range from 0.1 to 5.0 mols, preferably from 0.5 to 3.0 mols, and more preferably from 0.8 to 2.0 mols. If the amount of the component (g) added yields an amount of SiH groups that is less than 0.1 mols, then the time required for curing is increased, which is economically disadvantageous. Further, if the amount added yields an amount of SiH groups that exceeds 5.0 mols, then foaming is caused by a dehydrogenation reaction within the curing reaction product, and the strength and heat resistance of the cured reaction product are adversely affected.

### Component (h)

The platinum group metal-based catalyst of the component (h) is used for accelerating the addition curing reaction (the hydrosilylation reaction) between the component (f) and the component (g). Conventional platinum group metal-based catalysts can be used as the component (h), and the use of platinum or a platinum compound is preferred. Specific examples of the component (h) include platinum black, platinic chloride, chloroplatinic acid, alcohol-modified chloroplatinic acid, and complexes of chloroplatinic acid with olefins, aldehydes, vinylsiloxanes or acetylene alcohols.

The amount of the component (h) added need only be an effective catalytic amount, may be suitably increased or decreased in accordance with the desired curing reaction rate, and preferably, in terms of the mass of the platinum group metal relative to the mass of the component (f), falls within a range from 0.1 to 1,000 ppm, and more preferably from 0.2 to 100 ppm.

### ·Condensation-Curable Silicone composition

Specific examples of condensation-curable silicone compositions include compositions comprising:
(i) an organopolysiloxane containing at least two silanol groups (namely, silicon atom-bonded hydroxyl groups) or silicon atom-bonded hydrolyzable groups, preferably at both molecular chain terminals,
(j) as an optional component, a hydrolyzable silane and/or a partial hydrolysis-condensation product thereof, and
(k) as another optional component, a condensation reaction catalyst.

### Component (i)

The component (i) is an organopolysiloxane that contains at least two silanol groups or silicon atom-bonded hydrolyzable groups, and functions as the base polymer of the condensation-curable silicone composition. From the viewpoint of availability of the raw material, the organopolysiloxane of the component (i) has basically either a linear structure with no branching, in which the molecular chain (the main chain) is composed of repeating diorganosiloxane units (R⁹₂SiO_{2/2} units), and both molecular chain terminals are blocked with triorganosiloxy groups (R⁹₃SiO_{1/2} units), or has a cyclic structure with no branching in which the molecular chain is composed of repeating diorganosiloxane units, although these structures may partially include some branched structures. In the above description, R⁹ represents an unsubstituted or substituted monovalent hydrocarbon group of 1 to 10 carbon atoms, and preferably 1 to 8 carbon atoms.

In the organopolysiloxane of the component (i), examples of the hydrolyzable groups include acyloxy groups such as an acetoxy group, octanoyloxy group and benzoyloxy group; ketoxime groups (namely, iminoxy groups) such as a dimethyl ketoxime group, methyl ethyl ketoxime group and diethyl ketoxime group; alkoxy groups such as a methoxy group, ethoxy group and propoxy group; alkoxyalkoxy groups such as a methoxyethoxy group, ethoxyethoxy group and methoxypropoxy group; alkenyloxy groups such as a vinyloxy group, isopropenyloxy group and 1-ethyl-2-methylvinyloxy group; amino groups such as a dimethylamino group, diethylamino group, butylamino group and cyclohexylamino group; aminoxy groups such as a dimethylaminoxy group and diethylaminoxy group; and amide groups such as an N-methylacetamide group, N-ethylacetamide group and N-methylbenzamide group.

These hydrolyzable groups are preferably positioned at both molecular chain terminals of a linear diorganopolysiloxane, preferably in the form of either siloxy groups that contain two or three hydrolyzable groups, or siloxyallcyl groups that contain two or three hydrolyzable groups, such as trialkoxysiloxy groups, dialkoxyorganosiloxy groups, triacyloxysiloxy groups, diacyloxyorganosiloxy groups, triiminoxysiloxy groups (namely, triketoximesiloxy groups), diiminoxyorganosiloxy groups, trialkenoxysiloxy groups, dialkenoxyorganosiloxy groups, trialkoxysiloxyethyl groups and dialkoxyorganosiloxyethyl groups.

Examples of the other monovalent hydrocarbon groups bonded to silicon atoms include the same unsubstituted and substituted monovalent hydrocarbon groups as those illustrated for R¹ in the average composition formula (1). Specific examples of the component (i) include the compounds shown below.

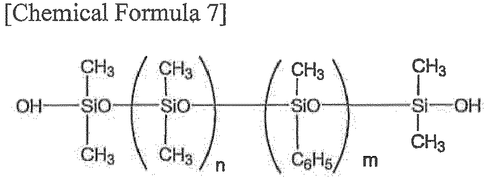

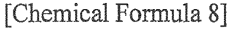

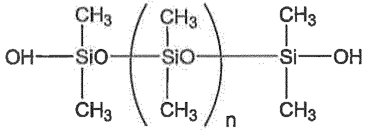

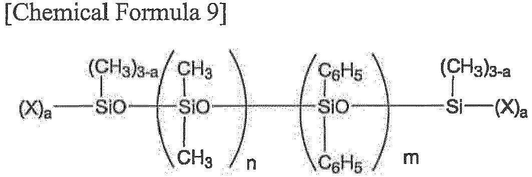

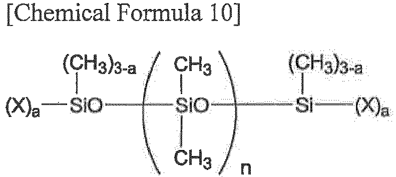

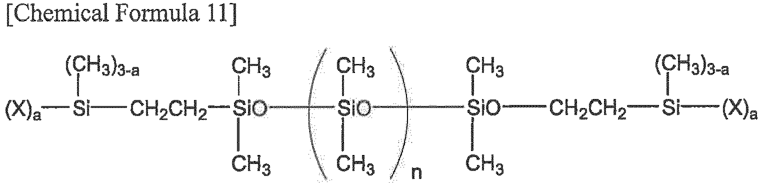

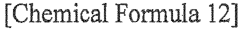

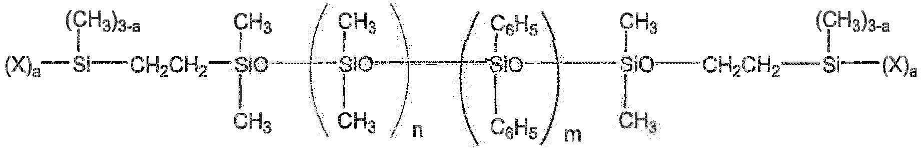

In the above formulas, X represents a hydrolyzable group, a represents 1, 2 or 3, and each of n and m represents an integer of 1 to 1,000.

Specific examples of the component (i) include dimethylpolysiloxane with both molecular chain terminals blocked with silanol groups, copolymers of dimethylsiloxane and methylphenylsiloxane with both molecular chain terminals blocked with silanol groups, copolymers of dimethylsiloxane and diphenylpolysiloxane with both molecular chain terminals blocked with silanol groups, dimethylpolysiloxane with both molecular chain terminals blocked with trimethoxysiloxy groups, copolymers of dimethylsiloxane and methylphenylsiloxane with both molecular chain terminals blocked with trimethoxysiloxy groups, copolymers of dimethylsiloxane and diphenypolylsiloxane with both molecular chain terminals blocked with trimethoxysiloxy groups, and dimethylpolysiloxane with both molecular chain terminals blocked with 2-trimethoxysiloxyethyl groups. Any one of these compounds may be used alone, or two or more different compounds may be used in combination.

### Component (j)

The hydrolyzable silane and/or partial hydrolysis-condensation product thereof of the component (j) is an optional component, and functions as a curing agent. In those cases where the base polymer of the component (i) is an organopolysiloxane that contains at least two silicon atom-bonded hydrolyzable groups within each molecule, the addition of the component (j) to the condensation-curable silicone composition can be omitted. Silanes containing at least three silicon atom-bonded hydrolyzable groups within each molecule and/or partial hydrolysis-condensation products thereof (namely, organopolysiloxanes that still retain at least one, or preferably two or more hydrolyzable groups) can be used favorably as the component (j).

Examples of the silane that can be used favorably include those represented, for example, by a formula (6) shown below:

R¹⁰ᵣSiX₄₋ᵣ (6)

wherein R¹⁰ represents an unsubstituted or substituted monovalent hydrocarbon group of 1 to 10 carbon atoms, and preferably 1 to 8 carbon atoms, X represents a hydrolyzable group, and r represents either 0 or 1. Examples of preferred groups for R¹⁰ include alkyl groups such as a methyl group, ethyl group, propyl group, butyl group, pentyl group and hexyl group; aryl groups such as a phenyl group and tolyl group; and alkenyl groups such as a vinyl group and allyl group.

Specific examples of the component (j) include methyltriethoxysilane, vinyltriethoxysilane, vinyltriacetoxysilane, ethyl orthosilicate, and partial hydrolysis-condensation products of these compounds. Any one of these compounds may be used alone, or two or more different compounds may be used in combination.

In those cases where a hydrolyzable silane and/or partial hydrolysis-condensation product thereof is used as the component (j), the amount of the component (j) added is preferably within a range from 0.01 to 20 parts by mass, and more preferably from 0.1 to 10 parts by mass, per 100 parts by mass of the component (i). In those cases where the component (j) is used, using an amount that satisfies the above range ensures that the composition of the present invention exhibits particularly superior storage stability and curing reaction rate.

### Component (k)

The condensation reaction catalyst of the component (k) is an optional component, and need not be used in the cases where the above hydrolyzable silane and/or partial hydrolysis-condensation product thereof of the component (j) contains, for example, aminoxy groups, amino groups or ketoxime groups. Examples of the condensation reaction catalyst of the component (k) include organotitanate esters such as tetrabutyl titanate and tetraisopropyl titanate; organotitanium chelate compounds such as diisopropoxybis(acetylacetonato)titanium and diisopropoxybis(ethylacetoacetate)titanium; organoaluminum compounds such as aluminum tris(acetylacetonate) and aluminum tris(ethylacetoacetate); organozirconium compounds such as zirconium tetra(acetylacetonate) and zirconium tetrabutyrate; organotin compounds such as dibutyltin dioctoate, dibutyltin dilaurate and dibutyltin di(2-ethylhexanoate); metal salts of organic carboxylic acids such as tin naphthenate, tin oleate, tin butyrate, cobalt naphthenate and zinc stearate; ammonia; amine compounds or the salts thereof such as hexylamine and dodecylamine phosphate; quaternary ammonium salts such as benzyltriethylammonium acetate; lower fatty acid salts of alkali metals such as potassium acetate and lithium nitrate; dialkylhydroxylamines such as dimethylhydroxylamine and diethylhydroxylamine; and guanidyl group-containing organosilicon compounds. Any one of these catalysts may be used alone, or two or more different catalysts may be used in combination.

In those cases where a condensation reaction catalyst of the component (k) is used, there are no particular limitations on the amount added, but the amount is preferably within a range from 0.01 to 20 parts by mass, and more preferably from 0.1 to 10 parts by mass, per 100 parts by mass of the component (i). When the component (k) is used, and its amount satisfies the above range, the composition is economically viable from the viewpoints of the curing time and curing temperature.

### ·Optional components of composition:

If needed, other components that are described above may be added to the various curable silicone compositions.

Components that can be added to any of the curable silicone compositions include, for example, compounds that volatilize or carbonize when heated in a non-oxidizing atmosphere. Specifically, such components include toluene, xylene or the like. Further, there can be used components that are converted, when heated in a non-oxidizing atmosphere, to compounds consisting of carbon, oxygen and silicon, and such components including dimethylsiloxane or the like.

Particularly, as a component to be added to the organic peroxide-curable silicone composition, there can be used an organopolysiloxane with both terminals blocked with trialkoxy groups, dialkoxyorgano groups, trialkoxysiloxyethyl groups, dialkoxyorganosiloxyethyl groups or the like.

As a component to be added to the radiation-curable silicone composition, there can be used organohydrogensiloxane.

As a component to be added to the addition-curable silicone composition, there can be used, as in the case of the organic peroxide-curable silicone composition, an organopolysiloxane with both terminals blocked with trialkoxy groups, dialkoxyorgano groups, trialkoxysiloxyethyl groups, dialkoxyorganosiloxyethyl groups or the like.

As a component to be added to the condensation-curable silicone composition, there can be used, for example, an organohydrogensiloxane and an organopolysiloxane having alkenyl groups.

### ·Curing method

A conventional and known method can be used to form and cure a curable silicone composition. Examples of the methods that have been proposed include a method in which a curable organopolysiloxane is heat cured in an atomized state (see JP 59-68333 A), a method in which a curable organopolysiloxane is emulsified in water using a homomixer, homogenizer, microfluidizer or colloid mill, and is subsequently cured (see JP 56-36546 A, JP 62-243621 A, JP 62-257939 A, JP 63-77942 A, JP 63-202658 A, JP 01-306471 A, JP 03-93834 A, JP 03-95268 A, JP 11-293111 A, JP 2001-2786 A and JP 2001-113147 A), and a method in which a curable organopolysiloxane is injected into water through a nozzle, and is subsequently cured within the water (see JP 61-223032 A, JP 01-178523 A and JP 02-6109 A).

### ·Conversion of Cured Silicone Powder to Silicon Carbide Powder:

The aforementioned cured silicone powder can be converted to a silicon carbide powder when thermally decomposed as a result of being subjected to a heating treatment at an even higher temperature in a non-oxidizing atmosphere.

This heating treatment is performed in a non-oxidizing atmosphere, preferably an inert gas atmosphere. As the inert gas, there can be used, for example, a nitrogen gas, an argon gas or a helium gas. Particularly, it is preferred that an argon gas be used for the purpose of obtaining a silicon carbide with a high purity.

The heating treatment is performed, for example, in a carbon furnace at a temperature higher than 1,500°C but not higher than 2,300°C. It is preferred that this heating treatment be performed in two stages. As a first stage, a mineralization heating treatment is preferably performed at a temperature of 400°C to 1,500°C. As a second stage, the heating treatment is then performed in a carbon furnace at a temperature higher than 1,500°C but not higher than 2,300°C. This heating is preferably performed at a temperature of 1,600°C or higher. Further, this heating is preferably performed at a temperature of 2,100°C or lower. As a result of this heating treatment, elimination of silicon monoxide and carbon monoxide from the silicone resin, i.e. the base polymer, starts. However, if this heating treatment is performed at a temperature higher than 2,300°C, crystallization in the produced silicon carbide progresses such that the aforementioned integrated value ratio exceeds 20%. A silicon carbide powder of this kind exhibits an unfavorable sinterability even when sintered under pressure. In fact, a sintered body thus obtained exhibits a specific resistance greater than 1 Ω·cm.

### ·Preparation of readily sinterable silicon carbide powder by mixing

Although the readily sinterable silicon carbide powder of the present invention can be produced through the aforementioned production method, it can also be prepared by combining other silicon carbide powder in some cases.

That is, when a blended silicon carbide powder consisting of: a silicon carbide powder of not less than 50% by mass but less than 100% by mass, with an integrated value ratio not higher than 20%; and a silicone carbide powder of more than 0% by mass but not more than 50% by mass, with an integrated value ratio higher than 20%, exhibits an integrated value ratio of 20% or lower as a whole, a carbon/silicon elemental ratio of 0.96 to 1.04, and an average particle diameter of 1.0 to 100 µm after being blended, such blended silicon carbide powder can thus be used as the readily sinterable silicon carbide powder of the present invention.

When a mixed silicon carbide powder obtained by mixing the readily sinterable silicon carbide powder of the present invention and a silicon carbide powder failing to satisfy at least one of the criteria of the integrated value ratio, carbon/silicon elemental ratio and average particle diameter as set by the present invention, fails to satisfy at least one of the criteria of the integrated value ratio, carbon/silicon elemental ratio and average particle diameter as set by the present invention as a whole, the corresponding mixed silicon carbide powder is outside the scope of the present invention. However, such mixed silicon carbide powder may be used for a certain purpose or application only when the powder satisfies the properties required for such purpose or application.

### -Silicon carbide powder-based composition-

The silicon carbide powder-based composition of the present invention is a silicon carbide powder-based composition containing:
the aforementioned readily sinterable silicon carbide powder; and
an organic binder, a carbon powder or a combination thereof.

An organic binder is added to facilitate molding. Normally, the amount of an organic binder is preferably 0 to 10 parts by mass, preferably 0.5 to 5 parts by mass, per 100 parts by mass of the silicon carbide powder. Examples of organic binder include methylcellulose, polyvinyl alcohol and the like, among which methylcellulose is preferred.

If necessary, a carbon powder may be added for the purpose of improving a mold releasability. By adding a carbon powder, a mold releasability between the silicon carbide ceramic sintered body and the container made of carbon can be improved when the silicon carbide ceramic sintered body is obtained by placing the composition in the container made of carbon and then sintering the same under pressure. At that time, the amount of the carbon powder in the composition is 0 to 10 parts by mass, preferably 0.5 to 5 parts by mass, per 100 parts by mass of the silicon carbide powder. There is no limitation on the kind of carbon powder as long as the carbon powder used is a carbon powder whose metallic impurities have been removed, i.e., a carbon powder with a high purity. Specifically, examples of such carbon powder include a natural graphite powder, an artificial graphite powder, fullerene or the like.

The silicon carbide powder-based composition can be prepared, as a ceramic clay for producing a silicon carbide molded product, by dry blending into the silicon carbide powder an organic binder and/or a carbon powder. In addition to that, there can also be added water, a plasticizer, a lubricant, an alcohol or the like, if necessary. Normally, the silicon carbide powder-based composition is prepared by dry blending into the silicon carbide powder an organic binder and/or a carbon powder, and then adding to the resulting mixture water or a mixed liquid prepared by mixing water and a plasticizer, a lubricant, etc. The mixture thus obtained can also be blended using a wet blending machine.

The composition is then dried to evaporate the water, if subjected to press molding in the following step. In this case, it is preferred that the composition be dried at a temperature of 80 to 150°C for 1 to 10 hours. If subjected to extrusion molding, the aforementioned composition can be used as a ceramic clay as it is. At that time, a water content in the composition is preferably 8 to 30 parts by mass per 100 parts by mass of a solid fraction.

### -Sintering under pressure-

According to the present invention, as a production method of the aforementioned silicon carbide ceramic sintered body, there is provided a production method including a step of sintering the aforementioned readily sinterable silicon carbide powder under pressure.

When performing such sintering, the aforementioned composition containing: the readily sinterable silicon carbide powder; and an organic binder and/or a carbon powder, may be subjected to sintering under pressure as described above.

The aforementioned pressure sintering is performed in a non-oxidizing atmosphere. As a method and device for pressure sintering, there can be used hot press, HIP (Hot Isostatic Press) and plasma sintering. Any one of these methods or devices may be used alone, or two or more of them may be used in combination. HIP and hot press are preferable, among which HIP is more preferable. It is even more preferred that HIP be performed after performing hot press, in a combined manner.

As a non-oxidizing atmosphere, an inert gas atmosphere is preferred. Examples of inert gas include a nitrogen gas, an argon gas, a helium gas and the like. Particularly, an argon gas is preferred for the purpose of obtaining a silicon carbide ceramic sintered body with a high purity.

A pressure level is preferably not lower than 20 MPa, more preferably not lower than 30 MPa. Although there is no upper limit on the pressure level, it is normally 100 MPa or lower due to the limitation imposed by the devices. A temperature used is within a range of 1,900 to 2,400°C. Particularly, a temperature of 1,950°C or higher is preferred, and a temperature of 2,000°C or higher is more preferred. Further, even more preferred is a temperature of 2,350°C or lower. If the applied pressure is lower than 20 MPa, an unfavorable sinterability is resulted, thereby causing the specific resistance of the silicon carbide ceramic sintered body to exceed 1 Ω·cm. Likewise, it is also more likely for such specific resistance to exceed 1 Ω·cm when the heating temperature is lower than 1,900°C. If the heating temperature is higher than 2,400°C, the material of a carbon furnace normally used as a sintering device decomposes severely.

The readily sinterable silicon carbide powder of the present invention or the aforementioned silicon carbide powder-based composition used as a ceramic clay can be molded into a required shape before being sintered, and then the molded product is subjected to sintering under pressure. It is preferred that the molding be carried out through press molding or extrusion molding.

### ·Press molding:

Press molding is carried out by, for example, filling a mold with the aforementioned silicon carbide powder-based composition that has been dried, and then applying a pressure to the mold, thus obtaining a molded product having a desired shape. Press molding is suitable for obtaining molded products with complex shapes.

As for press molding, it is preferred that the obtained molded product be subjected to CIP molding after performing normal press molding. That is, depressurization is at first performed after performing normal press molding on a desired composition at room temperature. At that time, it is preferred that the pressure of a press be 50 to 200 kgf/cm². Next, the molded product obtained is pressurized through a CIP molding machine (Cold Isostatic Press). CIP molding is performed by placing the aforementioned pressurized molded product in a rubber mold of a shape similar to that of the aforementioned mold, and then evenly pressurizing the molded product with a medium such as water from all directions including up, down, left and right, thus obtaining a molded product with a high density. It is preferred that the pressure of the press be 500 to 4,000 kgf/cm² at that time.

### ·Extrusion molding:

The aforementioned silicon carbide powder-based composition is placed in an extrusion molding machine, followed by allowing a screw in a cylinder of the molding machine to rotate so that the composition can be continuously extruded from a die. The composition thus extruded is then passed through a hollow electrically heated hot-air furnace that has a length of 1 to 2 m and is disposed close to a die exit. In this way, a molded product having a desired shape can be obtained. Extrusion molding is suitable for continuously molding long objects such as rod-shaped, pipe-shaped or belt-shaped objects. In this case, a heating temperature in the electrically heated hot-air furnace is 80 to 500°C, particularly preferably 100 to 250°C, and a heating time may be selected from a range from 1 to 30 min.

### -Silicon carbide ceramic sintered body-

According to the aforementioned pressure sintering method, there can be obtained a silicon carbide ceramic sintered body exhibiting a carbon/silicon elemental ratio of 0.96 to 1.04, preferably 0.97 to 1.03, more preferably 0.98 to 1.02, and a specific resistance of 1 Ω·cm or less, preferably 0.5 Ω·cm or less. The sintered body contains significantly few free carbon atoms and exhibits a low specific resistance.

A nitrogen content of such sintered body is less than 0.1 % by mass, preferably not higher than 0.05% by mass, more preferably not higher than 0.01% by mass. Further, a total content of Fe, Cr, Ni, Al, Ti, Cu, Na, Zn, Ca, Zr, Mg and B is less than 1 ppm, preferably not more than 0.5 ppm, more preferably not more than 0.1 ppm.

### -Heating in an air atmosphere-

A carbon fraction derived from the material of a carbon furnace that is used as a container for sintering; or a carbon powder added to improve the mold releasability with respect to the furnace, may be contaminated in the silicon carbide ceramic sintered body obtained through the pressure sintering method of the present invention. In order to remove such carbon, it is desired that heating be carried out in an air atmosphere. A temperature for such heating treatment is preferably 500 to 1,100°C, particularly preferably 600 to 1,000°C. A heating time may be appropriately selected depending on the size of the silicon carbide ceramic sintered body, and is normally selected form a range of 30 min to 10 hours. Although there is no limitation on the heating treatment, it is usually performed under normal pressure.

### Examples

The present invention is described in greater detail hereunder, with reference to working examples. However, the present invention is not limited to those examples. Further, each measurement method is as follows.

- Measurement of elemental ratio:
   Carbon: Carbon analyzer (by LECO Corporation, product name: CS230)
   Oxygen, Nitrogen, Hydrogen: Oxygen/Nitrogen/Hydrogen analyzer (by LECO Corporation, product name: TCH600)
   Silicon: the remainder of the above.
- Measurement of average particle diameter:
   Laser diffraction and scattering particle measurement device
- Measurement of ¹³C-NMR integrated value
   Solid NMR (¹³C-DDMAS)
- Measurement of impurity element
   ICP emission analysis (conforming to JIS R 1616)
- Measurement of specific resistance
   AC 4-Terminal method (conforming to JIS R 1661)

### ·Plasma resistance test of sintered body

A plasma treatment device manufactured by SAMCO Inc. (product name: RIE-10NR) was used. A thin plate made of quartz was placed in a treatment chamber, followed by placing a sample of the sintered body thereon. Introduced into the treatment chamber was a mixed gas of tetrafluoromethane and oxygen, each of them being introduced at a flow rate of 84 mP·m³/s (50sccm). A plasma was then generated with a high-frequency power of 440W, under a low-pressure condition with a vacuum of 10Pa. The aforementioned sample of the sintered body was treated with the plasma for 10 hours. A free carbon fraction contained in the sample was then released due to the plasma. By removing the sample after completing the treatment, a fine powder of carbon agglomerated and accumulated on the aforementioned thin plate, and a black contaminant was confirmed. The presence or absence of such black contaminant was observed with the naked eye and then evaluated.

### Example 1

### (Production of silicon carbide powder)

### (1) Production of cured silicone powder:

### Material:

(A) 100 parts by mass of the dimethylpolysiloxane represented by the following formula and having alkenyl groups within each molecule, 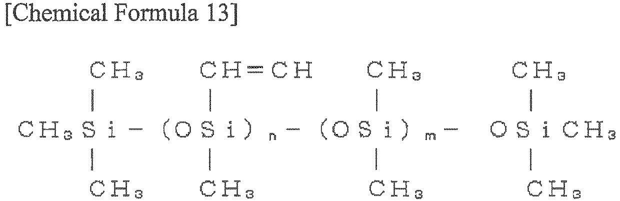 (In the formula, n and m are numbers that satisfy n/m=4/1 and provide a viscosity of the siloxane at 25°C of 600 mPa·s.)
(B) 0.5 parts by mass of benzoyl peroxide,
(C) 33 parts by mass of the diorganopolysiloxane represented by the following formula and having hydrogen atoms bonded to silicon atoms.

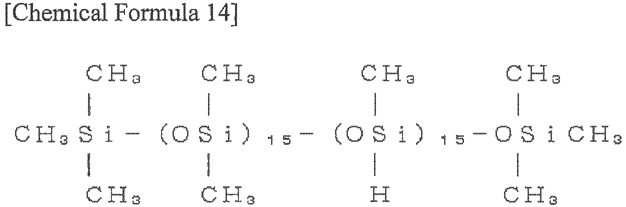

The aforementioned components (A) to (C) were placed in a planetary mixer (a mixer manufactured by INOUE MFG., INC.) and stirred therein for one hour at room temperature, thus obtaining a curable silicone composition having a viscosity of 100 mPa·s at room temperature. This curable silicone composition was then heat-cured for one hour at 150°C, thereby obtaining a silicone cured product.

This silicone cured product was further added to a planetary ball mill (manufactured by FRITSCH, product name: type P-5), and then pulverized for six hours at a rotation speed of 200 rpm, thus obtaining a cured silicone powder having an average particle diameter of 12 µm.

### (2) Production of inorganic powder:

The cured silicone powder thus obtained was placed in an alumina boat, and heated from room temperature to 1,000°C in an atmosphere furnace in an argon gas atmosphere at a rate of 100°C/hour over a period of approximately 10 hours , and was maintained at 1,000°C for an hour before cooled to room temperature at a rate of 200°C/hour. In this way, there was obtained a black inorganic powder substantially consisting of carbon, silicon and oxygen.

### (3) Production of silicon carbide powder

Next, this black inorganic powder, while being placed in the container made of carbon, was heated to 1,700°C in a carbon furnace in an argon gas atmosphere at a rate of 100°C/hour over a period of 17 hours, and was maintained for an hour before cooled to room temperature at a rate of 200°C/hour. In this way, there was obtained a green silicon carbide powder.

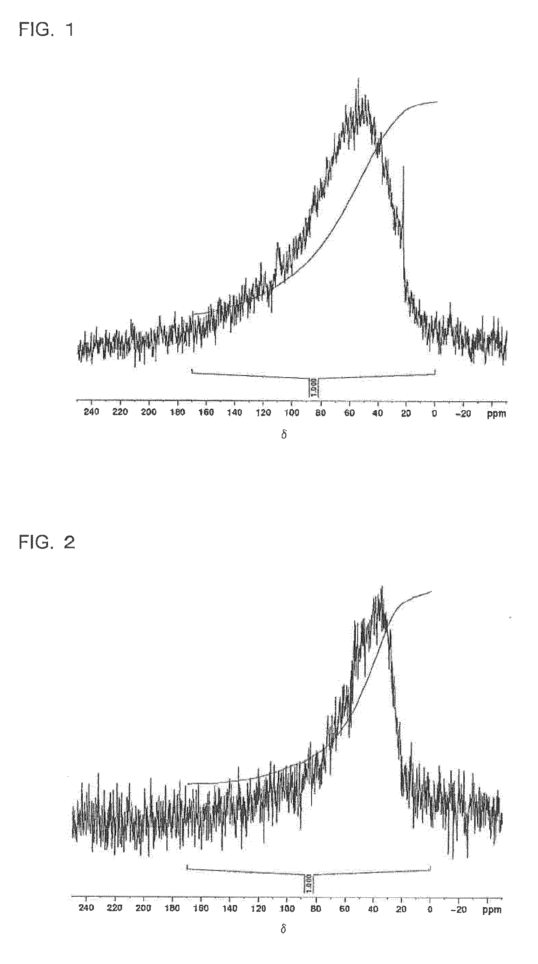

This silicon carbide powder exhibited a carbon/silicon elemental ratio of 1.01, an average particle diameter of 9µm, and an integrated value ratio of 8%. FIG.1 shows a chart of a ¹³C-NMR spectrum measured with respect to the silicon carbide powder that was used.

### (4) Production of silicon carbide ceramic sintered body

500g of the silicon carbide powder thus obtained was placed in a carbon mold having dimensions of diameter: 50 mm × depth: 240 mm. Under a pressure of 30 MPa applied by a hot press, the silicon carbide powder was heated to 2,100°C in an argon gas atmosphere at a rate of 100°C/hour over a period of 21 hours. Then, the temperature was maintained at 1,700°C for an hour before cooled to room temperature at a rate of 200°C/hour before the silicon carbide powder was removed from the carbon mold. Thus is obtained a green silicon carbide ceramic sintered body.

This silicon carbide ceramic sintered body exhibited a carbon/silicon elemental ratio of 1.02, a specific resistance of 4.01 ×10⁻² Ω·cm, a nitrogen content of 0.0043% by mass, and a total content of Fe, Cr, Ni, Al, Ti, Cu, Na, Zn, Ca, Zr, Mg and B of less than 1 ppm. In the plasma resistance test, no contamination was observed.

### Example 2

### (1) Firing in the atmosphere

The green silicon carbide ceramic sintered body obtained in (4) of Example 1 was heated from room temperature to 900°C in an air atmosphere at a rate of 300°C/hour over a period of approximately 3 hours, and was maintained at 900°C for three hours before cooled to room temperature at a rate of 200°C/hour, thereby obtaining a green silicon carbide ceramic sintered body.

This silicon carbide ceramic sintered body exhibited a carbon/silicon elemental ratio of 1.00, a specific resistance of 1.93×10⁻² Ω·cm, a nitrogen content of 0.0005% by mass, and a total content of Fe, Cr, Ni, Al, Ti, Cu, Na, Zn, Ca, Zr, Mg and B of smaller than 1 ppm. As for the plasma resistance test, no contamination was confirmed.

### Example 3

### (Production of silicon carbide powder)

A green silicon carbide powder was obtained in the same manner as Example 1, except that the inorganic powder obtained in (2) of Example 1, while being placed in the container made of carbon, was heated to 2,000°C in an argon gas atmosphere at a rate of 100°C/hour over a period of 20 hours, and was maintained at 2,000°C for an hour before cooled to room temperature at a rate of 200°C/hour. This silicon carbide powder exhibited a carbon/silicon elemental ratio of 1.00, an average particle diameter of 12 µm, and an integrated value ratio of 15%. FIG.2 shows a chart of a ¹³C-NMR spectrum measured. 500g of this silicon carbide powder was then treated in the same manner as in Example 1, thus obtaining a green silicon carbide ceramic sintered body.

This silicon carbide ceramic sintered body exhibited a carbon/silicon elemental ratio of 1.01, a specific resistance of 6.04×10⁻² Ω·cm, a nitrogen content of 0.0013% by mass, and a total content of Fe, Cr, Ni, Al, Ti, Cu, Na, Zn, Ca, Zr, Mg and B of smaller than 1 ppm. In the plasma resistance test, no contamination was observed.

### Example 4

### (1) Preparation of silicon carbide powder-based composition:

100 parts by mass of the silicon carbide powder obtained in (3) of Example 1 and 3 parts by mass of a methylcellulose (produced by Shin-Etsu Chemical Co., Ltd, product name: METOLOSE) as an organic binder, were placed in a container of a planetary ball mill, and then mixed together for an hour at room temperature. 20 parts by mass of water was added to a mixed powder thus obtained, followed by placing a mixture thus prepared in a planetary mixer and then stirring the mixture for an hour at room temperature, thereby obtaining a mixture. Thereafter, this mixture was heated at 105°C for five hours to evaporate the water, thus obtaining a powdery ceramic clay composition.

### (2) Production of molded product:

The ceramic clay composition obtained in (1) was placed in a mold, and was then pressurized for five minutes at a pressure of 10 MPa, thus obtaining a sheet-like molded product having dimensions of length: 40 mm × width: 40 mm × thickness: 2 mm. This molded product was further placed in a rubber mold, and was pressurized by a pressure of 200 MPa for an hour using a CIP molding machine (manufactured by KOBE STEEL, LTD, product name: Dr. CIP), thus obtaining a silicon carbide molded product. The dimensions of this silicon carbide molded product were length: 39 mm × width: 39 mm × thickness: 2 mm.

### (3) Production of silicon carbide ceramic sintered body

The silicon carbide molded product obtained in (2), while pressurized at a pressure of 190 MPa using HIP (manufactured by KOBE STEEL, LTD, product name: SYS50X-SB), was heated to 2,000°C in an argon gas atmosphere at a rate of 600°C/hour over a period of 3 hours, and was maintained at 2,000°C for an hour before cooled to room temperature, thereby obtaining a green silicon carbide ceramic sintered body.

The dimensions of this silicon carbide ceramic sintered body were length: 38 mm × width: 38 mm × thickness: 2 mm. Further, this silicon carbide ceramic sintered body exhibited a carbon/silicon elemental ratio of 1.03, a specific resistance of 6.08×10⁻² Ω·cm, a nitrogen content of 0.0045% by mass, and a total content of Fe, Cr, Ni, Al, Ti, Cu, Na, Zn, Ca, Zr, Mg and B of less than 1 ppm. In the plasma resistance test, no contamination was observed.

### Example 5

### (1) Calcination in atmosphere

The silicon carbide ceramic sintered body obtained in Example 4 was heated from room temperature to 900°C in an air atmosphere at a rate of 300°C/hour over a period of approximately 3 hours, and was maintained at 900°C for three hours before cooled to room temperature at a rate of 200°C/hour, thereby obtaining a green silicon carbide ceramic sintered body.

This silicon carbide ceramic sintered body exhibited a carbon/silicon elemental ratio of 1.01, a specific resistance of 3.08×10⁻² Ω·cm, a nitrogen content of 0.0038%, and a total content of Fe, Cr, Ni, Al, Ti, Cu, Na, Zn, Ca, Zr, Mg and B of smaller than 1 ppm. In the plasma resistance test, no contamination was observed.

### Example 6

100 parts by mass of the silicon carbide powder obtained in (3) of Example 1 and 6 parts by mass of a methylcellulose as an organic binder, were mixed together in the same manner as in Example 4. To the obtained mixed powder, 3 parts by mass of a lubricant (produced by NOF CORPORATION, product name: UNILUBE), 1 part by mass of a glycerin (produced by Sigma Aldrich Japan) as a plasticizer, and 20 parts by mass of water were then added, followed by placing the resulting mixture in a planetary mixer and then stirring the same for an hour at room temperature, thus obtaining a ceramic clay composition.

This composition was placed in an extrusion molding machine (manufactured by Miyazaki Iron Works Co., Ltd, product name: FM-P20), and was then continuously extruded from a die having dimensions of outer diameter: 10 mm × inner diameter: 8 mm. The composition thus extruded was then cut into a piece having a length of 10 mm using a piano wire, thereby obtaining a pipe-shaped silicon carbide molded product having dimensions of outer diameter: 10 mm × inner diameter: 8 mm × length: 10 mm. This molded product was then dried in the same manner as Example 4, thus obtaining a green silicon carbide molded product. The dimensions of such silicon carbide molded product were outer diameter: 9.7 mm × inner diameter: 8.7 mm × 10 mm.

The silicon carbide molded product thus obtained was then subjected to pressure sintering in the same manner as in Example 4 using HIP. The sintered body thus obtained had dimensions of outer diameter: 9.5 mm × inner diameter: 8.5 mm × length: 9.9 mm; and exhibited a carbon/silicon elemental ratio of 1.02, a specific resistance of 8.32×10⁻¹ Ω·cm, a nitrogen content of 0.0033% by mass, and a total content of Fe, Cr, Ni, Al, Ti, Cu, Na, Zn, Ca, Zr, Mg and B of less than 1 ppm. In the plasma resistance test, no contamination was observed.

### Example 7

The silicon carbide ceramic sintered body obtained in Example 6 was heated from room temperature to 900°C in an air atmosphere at a rate of 300°C/hour over a period of approximately 3 hours, and was maintained for the following 3 hours before cooled to room temperature at a rate of 200°C/hour, thereby obtaining a green silicon carbide ceramic sintered body having dimensions of outer diameter: 9.0 mm × inner diameter: 8.2 mm × length: 9.3 mm. This silicon carbide ceramic sintered body also exhibited a carbon/silicon elemental ratio of 1.00, a specific resistance of 2.90×10⁻² Ω·cm, a nitrogen content of 0.0032% by mass, and a total content of Fe, Cr, Ni, Al, Ti, Cu, Na, Zn, Ca, Zr, Mg and B of less than 1 ppm. In the plasma resistance test, no contamination was observed.

### Example 8

The silicon carbide ceramic sintered body obtained in Example 1 was further heated to 2,000°C at a pressure of 190 MPa applied by HIP in an argon gas atmosphere at a rate of 600°C/hour over a period of 3 hours, and was maintained at 2,000°C for the following 1 hour and then was allowed to cool to room temperature, thereby obtaining a green silicon carbide ceramic sintered body.

This silicon carbide ceramic sintered body exhibited a carbon/silicon elemental ratio of 1.00, a specific resistance of 4.33×10⁻³ Ω·cm, a nitrogen content of 0.0041 % by mass, and a total content of Fe, Cr, Ni, Al, Ti, Cu, Na, Zn, Ca, Zr, Mg and B of smaller than 1 ppm. In the plasma resistance test, no contamination was observed.

### Example 9

A silicon carbide powder was obtained in the same manner as in Example 1, except that the silicone cured product obtained in (1) of Example 1 was pulverized at a rotation speed of 200 rpm for 24 hours using a planetary ball mill to obtain a cured silicone powder having an average particle diameter of 6 µm.

This silicon carbide powder exhibited a carbon/silicon elemental ratio of 1.01, an average particle diameter of 5 µm, and an integrated value ratio of 8%. After obtaining a silicon carbide ceramic sintered body in the same manner as in Example 1 using this silicon carbide powder through hot pressing in the same manner as in Example 8 by using HIP, a green silicon carbide ceramic sintered body was obtained.

This silicon carbide ceramic sintered body exhibited a carbon/silicon elemental ratio of 1.00, a specific resistance of 5.63 × 10⁻² Ω·cm, a nitrogen content of 0.0061% by mass, and a total content of Fe, Cr, Ni, Al, Ti, Cu, Na, Zn, Ca, Zr, Mg and B of less than 1 ppm. In the plasma resistance test, no contamination was observed.

### Example 10

A silicon carbide powder was obtained in the same manner as in Example 1 except that the silicone cured product obtained in (1) of Example 1 was pulverized at the rotation speed of 200 rpm for four hours using the planetary ball mill to obtain a cured silicone powder having an average particle diameter of 25 µm.

This silicon carbide powder exhibited a carbon/silicon elemental ratio of 1.01, an average particle diameter of 20 µm, and an integrated value ratio of 8%. After obtaining a silicon carbide ceramic sintered body in the same manner as in Example 1 using this silicon carbide powder through hot pressing, a green silicon carbide ceramic sintered body was obtained using HIP in the same manner as Example 8.

This silicon carbide ceramic sintered body exhibited a carbon/silicon elemental ratio of 1.01, a specific resistance of 9.94×10⁻³ Ω·cm, a nitrogen content of 0.0032% by mass, and a total content of Fe, Cr, Ni, Al, Ti, Cu, Na, Zn, Ca, Zr, Mg and B of smaller than 1 ppm. As for the plasma resistance test, no contamination was observed.

### Example 11

A silicon carbide powder was obtained in the same manner as Example 1, except that the silicone cured product obtained in (1) of Example 1 was pulverized using the planetary ball mill at a rotation speed of 300 rpm for 24 hours to obtain a cured silicone powder having an average particle diameter of 2.7 µm.

This silicon carbide powder exhibited a carbon/silicon elemental ratio of 1.00, an average particle diameter of 2.5 µm, and an integrated value ratio of 8%. After obtaining a silicon carbide ceramic sintered body in the same manner as in Example 1 using this silicon carbide powder through hot pressing, a green silicon carbide ceramic sintered body was produced by using HIP in the same manner as in Example 8.

This silicon carbide ceramic sintered body exhibited a carbon/silicon elemental ratio of 1.00, a specific resistance of 1.14×10⁻¹ Ω·cm, a nitrogen content of 0.0055% by mass, and a total content of Fe, Cr, Ni, Al, Ti, Cu, Na, Zn, Ca, Zr, Mg and B of less than 1 ppm. In the plasma resistance test, no contamination was observed.

### Comparative example 1

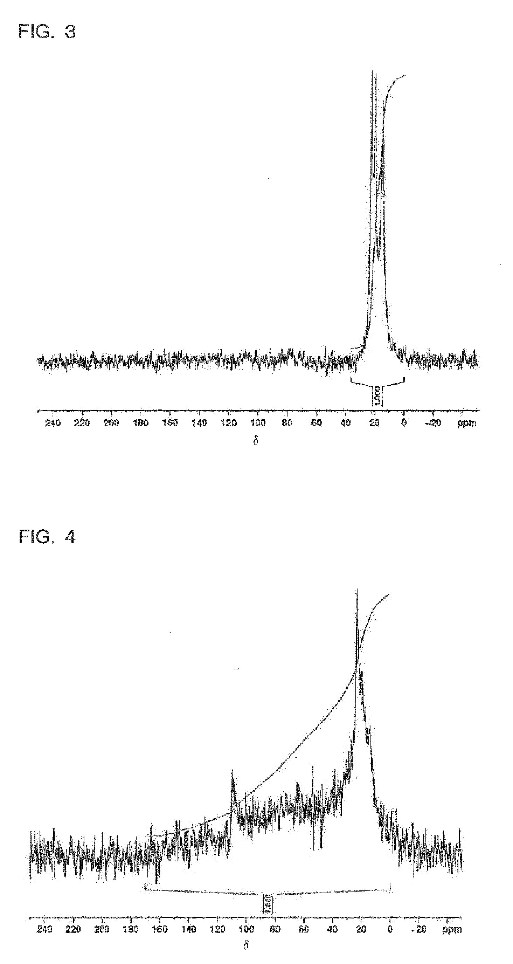

A blue-green silicon carbide ceramic sintered body was obtained by performing pressure sintering using a hot press in the same manner as in Example 1 except that there was used a commercially available silicon carbide powder (produced by Shinano Electric Refining Co., Ltd, product name: GC) instead of the readily sinterable silicon carbide powder used in Example 1. The silicon carbide powder used exhibited a carbon/silicon elemental ratio of 1.01, an average particle diameter of 10 µm, and an integrate value ratio of 99%. FIG.3 shows a chart of a ¹³C-NMR measured with respect to the silicon carbide powder that was used.

The silicon carbide ceramic sintered body thus obtained exhibited, through measurement, a carbon/silicon elemental ratio of 1.02 and a specific resistance of 2.86×10⁵ Ω·cm. The nitrogen content was 0.0137% by mass and the total content of Fe, Cr, Ni, Al, Ti, Cu, Na, Zn, Ca, Zr, Mg and B was more than 100 ppm.

### Comparative example 2

Pressure sintering using a hot press was attempted in the same manner as in Example 1 except that there was used a commercially available silicon carbide powder (by Sigma Aldrich Japan, product name: Nanopowder) instead of the readily sinterable silicon carbide powder used in Example 1. The silicon carbide powder used exhibited a carbon/silicon elemental ratio of 1.01, an average particle diameter of smaller than 100 nm, and an integrate value ratio of 39%. FIG.4 shows a chart of a ¹³C-NMR measured with respect to the silicon carbide powder that was used.

In order to perform pressure sintering, the above silicon carbide powder in the desired amount of 500 g was tried to be placed in a carbon mold having inside dimensions of diameter 50 mm × 240 mm. However, the powder was too bulky to be placed in the carbon mold, and, therefore, the amount of the silicon carbide powder to be placed in this mold was changed to 400 g, except which pressure sintering was performed using a hot press in a similar manner to Example 1. A silicon carbide ceramic sintered body thus obtained had a large number of holes and therefore was broken when removed from the carbon mold, thus failing to measure the properties thereof.

### Comparative example 3

The silicon carbide molded product obtained via CIP molding in (2) of Example 4 was heated to 2,000°C in a carbon furnace in an argon gas atmosphere without applying pressure at a rate of 100°C/hour over a period of 20 hours, and was maintained at 2,000°C for an hour before being cooled to room temperature at a rate of 200°C/hour, thereby obtaining a green silicon carbide ceramic sintered body having dimensions of length: 39 mm × width: 39 mm × thickness: 2 mm. This silicon carbide ceramic sintered body exhibited a carbon/silicon elemental ratio of 1.01, a nitrogen content of 0.0039% by mass, and a total content of Fe, Cr, Ni, Al, Ti, Cu, Na, Zn, Ca, Zr, Mg and B of less than 1 ppm, and a specific resistance of 6.02 Ω·cm. In the plasma resistance test, no contamination was observed.

### Comparative example 4

The silicon carbide molded product obtained via extrusion molding in Example 6 was heated to 2,000°C in a carbon furnace in an argon gas atmosphere without applying pressure at a rate of 100°C/hour over a period of 20 hours, and was maintained at 2,000°C for an hour before cooled to room temperature at a rate of 200°C/hour, thereby obtaining a silicon carbide ceramic sintered body having dimensions of outer diameter: 10 mm × inner diameter: 8 mm × length: 10 mm. This silicon carbide ceramic sintered body exhibited a specific resistance of 2.55×10¹ Ω·cm, a carbon/silicon elemental ratio of 1.01, a nitrogen content of 0.0032% by mass, and a total content of Fe, Cr, Ni, Al, Ti, Cu, Na, Zn, Ca, Zr, Mg and B of less than 1 ppm. In the plasma resistance test, no contamination was observed.

### Comparative example 5

A silicon carbide powder was obtained in the same manner as Example 1, except that the silicone cured product obtained in (1) of Example 1 was pulverized at a rotation speed of 400 rpm for 24 hours using the planetary ball mill to obtain a cured silicone powder having an average particle diameter of 0.6 µm.

This silicon carbide powder exhibited a carbon/silicon elemental ratio of 1.01, an average particle diameter of 0.5 µm, and an integrated value ratio of 8%. This silicon carbide powder was then sintered using a hot press in the same manner as Example 1, thus obtaining a silicon carbide ceramic sintered body.

This silicon carbide ceramic sintered body exhibited a carbon/silicon elemental ratio of 1.02, a specific resistance of 3.05 Ω·cm, a nitrogen content of 0.0033% by mass, and a total content of Fe, Cr, Ni, Al, Ti, Cu, Na, Zn, Ca, Zr, Mg and B of less than 1 ppm. In the plasma resistance test, no contamination was observed.

### Comparative example 6

100 g of tetraethoxysilane (produced by Shin-Etsu Chemical Co., Ltd) and 300 g of phenol (produced by Sigma Aldrich Japan) were heated to 1,000°C at a rate of 100°C/hour over a period of approximately 10 hours from room temperature, and was maintained at 1,000°C for another hour before cooled to room temperature at a rate of 200°C/hour, thereby obtaining a black inorganic powder substantially consisting of carbon, silicon and oxygen. Next, this black inorganic powder, while being placed in the container made of carbon, was heated to 1,700°C in a carbon furnace in an argon gas atmosphere at a rate of 100°C/hour over a period of 17 hours, and was maintained at 1,700°C for an hour before cooled to room temperature at a rate of 200°C/hour, thereby obtaining a black powder. An elemental analysis of the black powder revealed a C/Si elemental ratio of 1.05. Further, this black powder exhibited an average particle diameter 5.0 µm and an integrated value ratio of 99%. Furthermore, as for the plasma resistance test, contamination with black fine powder was observed.

The black powder thus obtained was then subjected to pressure sintering using a hot press in the same manner as in Example 1, thus obtaining a black sintered body. The C/Si elemental ratio of this black sintered body was confirmed to be 1.05 after performing an elemental analysis thereon.

The aforementioned examples and comparative examples are summarized and shown in Table 1 and Table 2.

**[Table 1]**

| | Silicon carbide powder | | | | Stage of processing | | |
|---|---|---|---|---|---|---|---|
| | Elemental ratio (C/Si) | Average particle diameter | ¹³C-NMR Integrated value ratio | ¹³C-NMR Chart | Molding method | Pressure sintering method | Firing in air atmosphere |
| Example 1 | 1.01 | 9 *µ*m | 8% | (FIG.1) | - | Hot press | Not fired |
| Example 2 | 1.01 | 9 *µ*m | 8% | (FIG.1) | - | Hot press | Fired |
| Example 3 | 1.00 | 12 *µ*m | 15% | (FIG.2) | - | Hot press | Not fired |
| Example 4 | 1.01 | 9 *µ*m | 8% | (FIG.1) | CIP molding | HIP | Not fired |
| Example 5 | 1.01 | 9 *µ*m | 8% | (FIG.1) | CIP molding | HIP | Fired |
| Example 6 | 1.01 | 9 *µ*m | 8% | (FIG.1) | Extrusion molding | HIP | Not fired |
| Example 7 | 1.01 | 9 *µ*m | 8% | (FIG.1) | Extrusion molding | HIP | Fired |
| Example 8 | 1.01 | 9 *µ*m | 8% | | - | Hot press + HIP | Not fired |
| Example 9 | 1.01 | 5 *µ*m | 8% | - | - | Hot press + HIP | Not fired |
| Example 10 | 1.01 | 20 *µ*m | 8% | - | - | Hot press HIP | Not fired |
| Example 11 | 1.00 | 2.5 *µ*m | 8% | - | - | Hot press + HIP | Not fired |
| Comparative example 1 | 1.01 | 10 *µ*m | 99% | (FIG.3) | - | Hot press | Not fired |
| Comparative example 2 | 1.01 | <100nm | 39% | (FIG.4) | - | Hot press | Not fired |
| Comparative example 3 | 1.01 | 9 *µ*m | 8% | (FIG.1) | CIP molding | Prossureless | Not fired |
| Comparative example 4 | 1.01 | 9 *µ*m | 8% | (FIG.1) | Extrusion molding | Pressureless | Not fired |
| Comparative example 5 | 1.01 | 0.5 *µ*m | 8% | - | - | Hot press | Not fired |
| Comparative example 6 | 1.05 | 5.0 *µ*m | 99% | - | - | Hot press | Not fired |

**[Table 2]**

| | Silicone carbide ceramic sintered body | | | | |
|---|---|---|---|---|---|
| | Elemental ratio (C/Si) | Specific resistance (Ω·cm) | Content rate of nitrogen (% by mass) | Content rate of impurities | Plasma resistance |
| Example 1 | 1.02 | 4.01 × 10⁻² | 0.0043 | <1ppm | No contamination |
| Example 2 | 1.00 | 1.93 × 10⁻² | 0.0005 | <1ppm | No contamination |
| Example 3 | 1.01 | 6.04 × 10⁻² | 0.0013 | <1ppm | No contamination |
| Example 4 | 1.03 | 6.08 × 10⁻² | 0.0045 | <1ppm | No contamination |
| Example 5 | 1.01 | 3.08 × 10⁻² | 0.0038 | <1ppm | No contamination |
| Example 6 | 1.02 | 8.32 × 10⁻¹ | 0.0032 | <1ppm | No contamination |
| Example 7 | 1.00 | 2.90 × 10⁻¹ | 0.0032 | <1ppm | No contamination |
| Example 8 | 1.00 | 4.33 × 10⁻³ | 0.0041 | <1ppm | No contamination |
| Example 9 | 1.00 | 5.63 × 10⁻² | 0.0061 | <1ppm | No contamination |
| Example 10 | 1.01 | 9.94 × 10⁻³ | 0.0032 | <1ppm | No contamination |
| Example 11 | 1.00 | 1.14 × 10⁻¹ | 0.0055 | <1ppm | No contamination |
| Comparative example 1 | 1.02 | 2.86 × 10⁻⁵ | 0.0137 | >100ppm | No contamination |
| Comparative example 2 | Molding failed | | | | |
| Comparative example 3 | 1.01 | 6.02 | 0.0039 | <1ppm | No contamination |
| Comparative example 4 | 1.01 | 2.55 × 10¹ | 0.0032 | <1ppm | No contamination |
| Comparative example 5 | 1.02 | 3.05 | 0.0033 | <1ppm | No contamination |
| Comparative example 6 | 1.05 | 3.01 | 0.0013 | <1ppm | Contamination observed |

### Industrial applicability

The silicon carbide powder of the present invention is useful for producing a pure and dense silicon carbide molded product containing very little free carbon. Such silicon carbide molded product is suitable for use in, for example, a board, a process tube, etc. used in a step of heating a semiconductor wafer or a step of thermally dispersing trace elements in such semiconductor wafer, in the field of semiconductor device production.

## Claims

1. A readily sinterable silicon carbide powder having:
a carbon/silicon elemental ratio of 0.96 to 1.04;
an average particle diameter of 1.0 to 100 µm; and
a ratio of 20% or less of an integrated value of an absorption intensity in a chemical shift range of 0 to 30 ppm to an integrated value of an absorption intensity in a chemical shift range of 0 to 170 ppm, in a ¹³C-NMR spectrum.

2. A method for producing the readily sinterable silicon carbide powder as set forth in claim 1, comprising obtaining a silicon carbide powder by thermally decomposing a cured silicone powder in a non-oxidizing atmosphere.

3. The method for producing the readily sinterable silicon carbide powder according to claim 2, comprising a step of pulverizing the obtained silicon carbide powder to a required average particle diameter.

4. A silicon carbide powder-based composition comprising:
the readily sinterable silicon carbide powder as set forth in claim 1; and
an organic binder, a carbon powder or a combination thereof.

5. A ceramic sintered body of silicon carbide having:
a carbon/silicon elemental ratio of 0.96 to 1.04; and
a specific resistance of 1 Ω·cm or less.

6. The ceramic sintered body according to claim 5, having:
a nitrogen content of smaller than 0.1% by mass; and
a total content of Fe, Cr, Ni, Al, Ti, Cu, Na, Zn, Ca, Zr, Mg and B of less than 1 ppm.

7. A method for producing the ceramic sintered body of silicon carbide as set forth in claim 5, comprising performing pressure sintering on solely the readily sinterable silicon carbide powder as set forth in claim 1, or on a composition containing said readily sinterable silicon carbide powder and at least one of an organic binder and a carbon powder.

8. The method according to claim 7, wherein either said readily sinterable silicon carbide powder or said composition containing said readily sinterable silicon carbide powder and at least one of an organic binder and a carbon powder is formed in a molding method into a required shape, and then the resulting molded product is subjected to said pressure sintering.

9. The method according to claim 8, wherein said molding method is press molding or extrusion molding.

10. The method according to claim 8, wherein said molding is performed through press molding, and then through CIP molding.

11. The method according to claim 7, wherein said pressure sintering is performed at a temperature of 1,900 to 2,400°C and at a pressure of 20 MPa or higher in a non-oxidizing atmosphere.

12. The method according to claim 11, wherein said non-oxidizing atmosphere is an inert gas atmosphere.

13. The method according to claim 12, wherein said inert gas is an argon gas.

14. The method according to claim 7, wherein said pressure sintering is performed through one of or a combination of two or more of hot press sintering, HIP sintering and plasma sintering.

15. The method according to claim 7, wherein said pressure sintering is performed through a combination of hot press sintering and following HIP sintering.

16. The method according to claim 7, wherein the method further comprises firing in an air atmosphere the sintered body obtained through said pressure sintering.

17. The method according to claim 16, wherein said firing in the air atmosphere is performed at a temperature of 500 to 1,100°C.
